# EUROPEAN PATENT SPECIFICATION

(11) **EP 1 627 499 B1**
(45) Date of publication and mention of the grant of the patent: **17.07.2013**
(21) Application number: 04753545.5
(22) Date of filing: 27.05.2004
(51) Int. Cl.: H04L 12/28

(54) **ARRANGEMENT FOR TRAVERSING AN IPv4 NETWORK BY IPv6 MOBILE NODES**
ANORDNUNG ZUM DURCHQUEREN EINES IPV4-NETZWERKS DURCH IPV6-MOBILKNOTEN
DISPOSITIF POUR FAIRE TRAVERSER UN RESEAU IPV4 PAR DES NOEUDS DE MOBILES IPV6

(30) Priority: 28.05.2003 US 446191
(43) Date of publication of application: 22.02.2006
(73) Proprietor: Cisco Technology, Inc., San Jose, CA 95134-1706 (US)
(72) Inventor: THUBERT, Pascal, F-06480 La Colle Sur Loup (FR); MOLTENI, Marco, Res. Le Clos de l'Angelus, BAT 1A 06600 Antibes (FR); WETTERWALD, Patrick, F-06370 Mouans Sartoux (FR); TROAN, Ole, Redhill, RH1 1AN (GB)
(74) Representative: Kazi, Ilya
(86) International application number: PCT/US2004/016728
(87) International publication number: WO 2004/107126

(56) References cited:
- US-B1- 6 172 986
- THUBERT M MOLTENI P WETTERWALD CISCO SYSTEMS P: "IPv4 traversal for MIPv6 based Mobile Routers draft-thubert-nemo-ipv4-traversal-01; draft-thubert-nemo-ipv4-travers al-01.txt", IETF STANDARD-WORKING-DRAFT, INTERNET ENGINEERING TASK FORCE, IETF, CH, no. 1, 22 May 2003 (2003-05-22), XP015005496, ISSN: 0000-0004
- CARPENTER K MOORE B: "Connection of IPv6 Domains via IPv4 Clouds; draft-ietf-ngtrans-6to4-07.t", IETF STANDARD-WORKING-DRAFT, INTERNET ENGINEERING TASK FORCE, IETF, CH, vol. ngtrans, no. 7, 1 September 2000 (2000-09-01), XP015024219, ISSN: 0000-0004
- PERKINS ET AL: 'Mobility Support in IPv6', November 1996 pages 27 - 37, XP002983450
- KARAGIANNIS: 'Mobile IP-State of the Art Report', 1999, ERICSSON pages 1 - 63, XP002235649
- THUBERT M MOLTENI P WETTERWALD CISCO SYSTEMS P: "IPv4 traversal for MIPv6 based Mobile Routers draft-thubert-nemo-ipv4-traversal-00; draft-thubert-nemo-ipv4-travers al-00.txt", IETF STANDARD-WORKING-DRAFT, INTERNET ENGINEERING TASK FORCE, IETF, CH, 1 February 2003 (2003-02-01), XP015005495, ISSN: 0000-0004

## Description

### BACKGROUND OF THE INVENTION

### FIELD OF THE INVENTION

The present invention relates to transport of Internet Protocol Version 6 (IPv6) packets by IPv6 nodes via an IPv4 network having a Network Address Translator (NAT) or a Port Address Translator (PAT).

### DESCRIPTION OF THE RELATED ART

Proposals have been made by Internet Engineering Task Force (IETF) groups for improved mobility support of Internet Protocol (IP) based mobile devices (e.g., laptops, IP phones, personal digital assistants, etc.) in an effort to provide continuous Internet Protocol (IP) based connectivity. The IETF has two working groups focusing on mobile networks, a Mobile Ad-hoc Networks (MANET) Working Group that is working to develop standardized MANET routing specification(s) for adoption by the IETF, and NEMO (mobile networks). NEMO uses Mobile IP (MIP) to provide connectivity between mobile networks and the infrastructure (e.g." the Internet). The key component in NEMO is a mobile router that handles MIP on behalf of the mobile networks that it serves.

A "Mobile IPv6" protocol is disclosed in an Internet Draft by Johnson et al., entitled "Mobility Support in IPv6", available on the World Wide Web at the address: http://www.ietf.org/intemet-drafts/draft-ietf-mobileip-ipv6-21.txt . According to Johnson et al., the Mobile IPv6 protocol enables a mobile node to move from one link to another without changing the mobile node's IP address. In particular, the mobile node is assigned a "home address". The "home address" is an IP address assigned to the mobile node within its home subnet prefix on its home link. While a mobile node is at home, packets addressed to its home address are routed to the mobile node's home link, using conventional Internet routing mechanisms.

The mobile node also is assigned a home agent for registering any care-of address used by the mobile node at its point of attachment to the Internet while the mobile node is away from its home link. A care-of address is an IP address associated with a mobile node that has the subnet prefix of a particular link away from its home link (i.e., a foreign link). A home agent is a router on a mobile node's home link with which the mobile node has registered its current care-of address. While the mobile node is away from its home link, the home agent intercepts packets on the home link destined to the mobile node's home address; the home agent encapsulates the packets, and tunnels the packets to the mobile node's registered care-of address.

Hence, a mobile node is always addressable by its "home address": packets may be routed to the mobile node using this address regardless of the mobile node's current point of attachment to the Internet. The mobile node also may continue to communicate with other nodes (stationary or mobile) after moving to a new link. The movement of a mobile node away from its home link is thus transparent to transport and higher-layer protocols and applications.

Proposals are underway by the Next Generation Transition (NGTRANS) Working Group of the Internet Engineering Task Force (IETF) to enable network nodes to transmit IP packets, generated according to IPv6 protocol as specified by the Request for Comments (RFC) 2460, across an IPv4 network. In particular, RFC 3056 proposes an interim solution (referred to herein as "the 6to4 proposal") of sending IPv6 packets as payload for IPv4 packets, where an interim unique IPv6 address prefix is assigned to any node that has at least one globally unique IPv4 address. These RFCs are available at the IETF website on the World Wide Web at http://www.ietf.org.

The 6to4 proposal specifies that an IPv6 node has an IPv6 address that contains an assigned IPv4 address, resulting in an automatic mapping between the IPv6 and IPv4 addresses. Hence, the IPv6 node can easily encapsulate the IPv6 packet with an IPv4 header based on extracting the assigned IPv4 address from within its IPv6 address. In particular, RFC 3056 specifies that the Internet Assigned Numbers Authority (IANA) has permanently assigned one 13-bit IPv6 Top Level Aggregator (TLA) identifier under the IPv6 Format Prefix "001 "for the 6to4 proposal: the numeric value of the TLA is 0x00002, i.e., it has a value of 2002::/16 when expressed as a 16-bit IPv6 address prefix. Hence, a 48-bit address prefix is created by the format prefix "001 ", followed by the 13-bit TLA "0x00002", followed by the assigned 32-bit IPv4 address; the remaining 80 bits of the 128-bit IPv6 address are available for a 16-bit Site-Level Aggregation Identifier (SLA ID), and a 64-bit Interface ID. Consequently, any node having at least one globally unique IPv4 address can have a globally unique IPv6 address, even if the node is combined with an IPv4 Network Address Translator (NAT).

Concerns arise in the event that an IPv6 node is coupled to a private IPv4 network having a Network Address Translator (NAT). NATs perform a Layer-3 translation of IP-Addresses, so that public Internet addresses map to private IP addresses, as described in detail by the Request for Comments 1918 (RFC 1918). This mapping has allowed enterprises to map a large number of private addresses to a limited number of public addresses, thus limiting the number of public addresses required by Internet users.

As described in RFC 3056, however, if an IPv6 node is coupled to an IPv4 network having a NAT, then the NAT box "must also contain a fully functional IPv6 router including the 6to4 mechanism" in order for the 6to4 proposal to still be operable in the IPv4 network having the NAT. However, the modification of existing NATs to include IPv6 routers to include the 6to4 mechanism may not be a practical solution.

Further, the IPv4 addresses of the 6to4 protocol are assumed to be global public addresses. Hence, if an IPv6 node (i.e., a correspondent node) wants to communicate with a roaming mobile IPv6 node, the 6to4 address of the roaming mobile IPv6 node must be a global public address, not a private address.

One proposal for traversing a NAT by an IPv6 node using automatic tunneling is described in an IETF Draft by Huitema, entitled "Teredo: Tunneling IPv6 over UDP through NATs", September 17,2002, available on the World Wide Web at the address: http://www.ietf.org/internet-drafts/dran-ietf-ngtrans-shipworm-08.txt.

Huitema suggests that IPv6 nodes located behind NATs can access "Teredo servers" and "Teredo relays" to learn their "global address" and to obtain connectivity, where clients, servers, and relays can be organized in "Teredo networks". Huitema relies on a complex client server-based interaction between the client (i.e., the IPv6 node) behind the NAT in the private IPv4 address realm, and the Teredo server and Teredo relay on the opposite side of the NAT in the public IPv4 address realm. Hence, the communications between the IPv6 node on the private side of the NAT, and the Teredo server and the Teredo relay on the public side of the NAT, (via the NAT), require that the IPv6 node has a specified path to both the Teredo server and the Teredo relay gateway on the public side; hence, the IPv6 node needs to use the same IPv4 identifier (e.g., UDP port IP address that is being translated by the NAT).

This same IPv4 identifier for communications with the Teredo server and Teredo relay, however, is impossible with symmetric NATs because the Teredo server and Teredo relay each have a distinct corresponding IPv4 public address. In particular, symmetric NATs index their address translation tables not only by private IP address/private UDP port/public IP address/ public UDP port of the packet output by a private IPv4 node, but also by the destination IP address and destination port specified by the packet and destined for the public IPv4 network. Hence, since the Teredo server and Teredo relay have distinct IP addresses, the symmetric NAT will not map the packets to the same private IP address/private UDP port used by the private IPv4 node. Hence, the Huitema solution cannot traverse a symmetric NAT.

### SUMMARY OF THE INVENTION

There is a need for an arrangement that enables IPv6 nodes to communicate transparently across an IPv4 network, regardless of whether the IPv6 nodes are separated across the IPv4 network by a symmetrical NAT.

There also is a need for an arrangement that enables IPv6 nodes to transport IPv6 packets across an IPv4 network, without the necessity of each IPv6 node serving as an IPv4 endpoint to store state information.

There also is a need for an arrangement that enables IPv4 connections to be established across a NAT by IPv6 gateways in a manner that minimizes use of NAT resources.

These and other needs are attained by the present invention, where a source IPv6 mobile node is configured for establishing an IPv4 connection with destination IPv6 router using a synthetic tag address, specifying a forwarding protocol, that serves as a valid care-of address for the IPv6 mobile node. The synthetic tag address has an address prefix routed to the IPv6 router, where an IPv6 packet specifying the address prefix within its corresponding destination address field is routed to the destination IPv6 router. The address prefix includes a protocol identifier, and an IPv4 address for the IPv6 router. An address suffix for the synthetic tag address specifies an IPv4 source address for the source IPv6 mobile node, a UDP source port for the IPv6 mobile node, and a UDP destination port for the destination IPv6 router. Hence, the synthetic tag address enables the destination IPv6 router to send an IPv6 reply packet back to the source IPv6 mobile node via the IPv4 network, regardless of whether the IPv4 network includes a NAT that separates the source and destination IPV6 mobile routers.

One aspect of the present invention provides method in an IPv6 mobile node. The method includes first generating an IPv6 tag address comprising a preferably routable prefix for an IPv6 gateway , the IPv6 tag address including an IPv4 gateway address for the IPv6 gateway and a protocol identifier for identifying to the IPv6 gateway a protocol for transferring packets from an IPv4 network to an IPv6 network or from the IPv6 network to the IPv4 network. The method also includes second generating an IPv6 packet having a source address field that specifies the IPv6 tag address, and a header that specifies a home address assigned to the IPv6 mobile node. The method also includes encapsulating the IPv6 packet in an IPv4 packet. The IPv4 packet has an IPv4 header including a destination address field that specifies the IPv4 gateway address, and a source address field specifying a mobile node IPv4 address for the IPv6 mobile node. The IPv4 packet also includes a transport header having a source port field specifying a prescribed UDP port for the IPv6 mobile node, and a destination port field specifying a prescribed UDP port for the IPv6 gateway used for identifying transfer of the IPv6 packet between the IPv4 network and the IPv6 network. The method also includes outputting the IPv4 packet to the IPv6 gateway via the IPv4 network, for transfer of the IPv6 packet onto the IPv6 network.

Another aspect of the present invention provides a method in an IPv6 router. The method includes attaching to an IPv4 network using an IPv4 gateway address and an IPv6 network using an IPv6 address, and receiving from the IPv4 network an IPv4 packet having a destination address field specifying the IPv4 gateway address, a destination port field specifying a prescribed UDP gateway port, a source address field specifying an IPv4 address and a source port field specifying a second UDP port. The method also includes recovering an IPv6 packet from the IPv4 packet in response to detecting the prescribed UDP gateway port in the destination port field. The method also includes detecting within a source address field of the IPv6 packet an IPv6 tag address comprising a preferably routable prefix for an IPv6 gateway, the IPv6 tag address including an IPv4 gateway address for the IPv6 gateway and a protocol identifier for identifying to the IPv6 gateway a protocol for transferring packets from the IPv4 network to the IPv6 network or from the IPv6 network to the IPv4 network. The IPv6 tag address further includes a second IPv4 address distinct from the IPv4 address. The method also includes modifying the IPv6 tag address into a modified IPv6 tag address, in response to detecting the protocol identifier, by overwriting the second IPv4 address with the IPv4 address and inserting the second UDP port into the IPv6 tag address. The IPv6 packet is updated into an updated IPv6 packet by inserting the modified IPv6 tag address into the source address field of the IPv6 packet, and the updated IPv6 packet is output onto the IPv6 network. The IPv6 router housing advertised, on the IPv6 network, the address prefix of the modified IPv6 tag address.

Another aspect of the present invention provides an IPv6 mobile node. The IPv6 mobile node comprises: means for first generating an IPv6 tag address comprising a preferably routable prefix for an IPv6 gateway, the IPv6 tag address including an IPv4 gateway address for the IPv6 gateway and a protocol identifier for identifying to the IPv6 gateway a protocol for transferring packets from an IPv4 network to an IPv6 network and from the IPv6 network to the IPv4 network; means for second generating an IPv6 packet having a source address field that specifies the IPv6 tag address, and a header that specifies a home address assigned to the IPv6 mobile node; means for encapsulating the IPv6 packet in an IPv4 packet having an IPv4 header including a destination address field that specifies the IPv4 gateway address, a source address field specifying a mobile node IPv4 address for the IPv6 mobile node, and a transport header having a source port field specifying a prescribed UDP port for the IPv6 mobile node, and a destination port field specifying a prescribed UDP port for the IPv6 gateway used for identifying transfer of the IPv6 packet between the IPv4 network and the IPv6 network; and means for outputting the IPv4 packet to the IPv6 gateway via the IPv4 network, for transfer of the IPv6 packet onto the IPv6 network.

Another aspect of the present invention provides an IPv6 router. The IPv6 router includes: means for attaching to an IPv4 network using an IPv4 gateway address and an IPv6 network using an IPv6 address; means for receiving from the IPv4 network an IPv4 packet having a destination address field specifying the IPv4 gateway address, a destination port field specifying a prescribed UDP gateway port, a source address field specifying an IPv4 address and a source port field specifying a second UDP port; means for recovering an IPv6 packet from the IPv4 packet in response to detecting the prescribed UDP gateway port in the destination port field; means for detecting within a source address field of the IPv6 packet an IPv6 tag address comprising a preferably routable prefix for an IPv6 gateway, the IPv6 tag address including an IPv4 gateway address for the IPv6 gateway and a protocol identifier for identifying to the IPv6 gateway a protocol for transferring packets from the IPv4 network to the IPv6 network or from the IPv6 network to the IPv4 network, the IPv6 tag address further including a second IPv4 address distinct from the IPv4 address; means for modifying the IPv6 tag address into a modified IPv6 tag address, in response to detecting the protocol identifier, by overwriting the second IPv4 address with the IPv4 address and inserting the second UDP port into the IPv6 tag address; means for updating the IPv6 packet into an updated IPv6 packet by inserting the modified IPv6 tag address into the source address field of the IPv6 packet; and means for outputting the updated IPv6 packet onto the IPv6 network. The IPv6 router housing advertised, on the IPv6 network, the address prefix of the modified IPv6 tag address.

Additional advantages and novel features of the invention will be set forth in part in the description which follows and in part will become apparent to those skilled in the art upon examination of the following or may be learned by practice of the invention. The advantages of the present invention may be realized and attained by means of instrumentalities and combinations particularly pointed out in the appended claims.

### BRIEF DESCRIPTION OF THE DRAWINGS

Reference is made to the attached drawings, wherein elements having the same reference numeral designations represent like elements throughout and wherein:
Figure 1 is a diagram illustrating IPv6 mobile routers establishing an IPv4 connection across an IPv4 network utilizing a network address translator (NAT), according to an embodiment of the present invention.
Figure 2 is a diagram illustrating in further detail the IPv6 mobile routers of Figure 1, according to an embodiment of the present invention.
Figures 3A, 3B and 3C are diagrams illustrating IPv6 tag addresses generated and modified by the IPv6 source and destination mobile routers serving as the IPv4 connection endpoints.
Figure 4 is a diagram illustrating an IPv4 packet, output by the source mobile node of Figure 1 and carrying an IPv6 packet, that encounters address translation by a NAT/PAT and a reverse NAT/PAT.
Figures 5A and 5B are flow diagrams summarizing the method of sending IPv6 packets across an IPv4 network, according to an embodiment of the present invention.
Figure 6 is a diagram illustrating IPv6 mobile routers establishing an IPv4 connection across an IPv4 network utilizing a network address translator (NAT) and a reverse NAT, according to an alternate embodiment of the present invention.

### BEST MODE FOR CARRYING OUT THE INVENTION

The generation and use of reverse routing headers was published on June 19,2002 by the inventors as an Internet Draft,"IPv6 Reverse Routing Header and its application to Mobile Networks"available on the World Wide Web http ://www. ietf. org/internet-drafts/draft-thubert-nemo-reverse-routing-header-00. txt A more recent version was published October 11, 2002, available on the World Wide Web at http : //www. ietf. org/intemet-drafts/draft-thubert-nemo-reverse-routing-header-Ol. txt

The disclosed improvement eliminates the necessity of reverse routing headers by generating an IPv6 tag address that is a valid IPv6 address and that serves as the care-of address for an IPv6 mobile node (e. g., IPv6 mobile host computer, IPv6 mobile router). In particular, inventors of the subject application written as an Internet Draft in February 2003, entitled"IPv4 Traversal for MIPv6 Based Mobile Routers" made available on the World Wide Web at http://www. ietf. org/internet-drafts/draft-thubert-nemo-ipv4-traversal-00. txt on 21 March 2003 as indicated on http://datatracker.ietf.org/doc/draf)-thubert-nemo-ipv4-traversal/history/. A more recent version of that Internet Draft (draft-thubert-nemo- IPv4-traversal-01) is attached as an Appendix.

As described in the attached Appendix, the IPv6 tag address (referred to in the Appendix as a"Doors Handle") includes a 48-bit address prefix that includes a 32-bit IPv4 address of a destination IPv6 gateway router (referred to in the Appendix as a"Door"), and a 16-bit prescribed protocol identifier (referred to in the Appendix as the 3-bit Format Prefix and the 13-bit Top-Level Aggregation Identifier (TLA ID)) that enables the destination IPv6 gateway router (i. e.,"Door") to identify that the received IPv4 packet includes an IPv6 packet that needs to be forwarded on a connected IPv6 network. In addition, the 16-bit prescribed protocol identifier is positioned at the beginning of the 48-bit address prefix, in accordance with RFC 3056, to enable the 48-bit address prefix to be routable to the destination IPv6 gateway router. Hence, the 128-bit care-of address of the IPv6 mobile node is routable to the destination IPv6 gateway router by other nodes in the connected IPv6 network according to existing routing protocols, and includes sufficient information to enable the IPv6 gateway router to forward any IPv6 packet specifying the care-of address in the destination address field to the IPv6 mobile node via the IPv4 network.

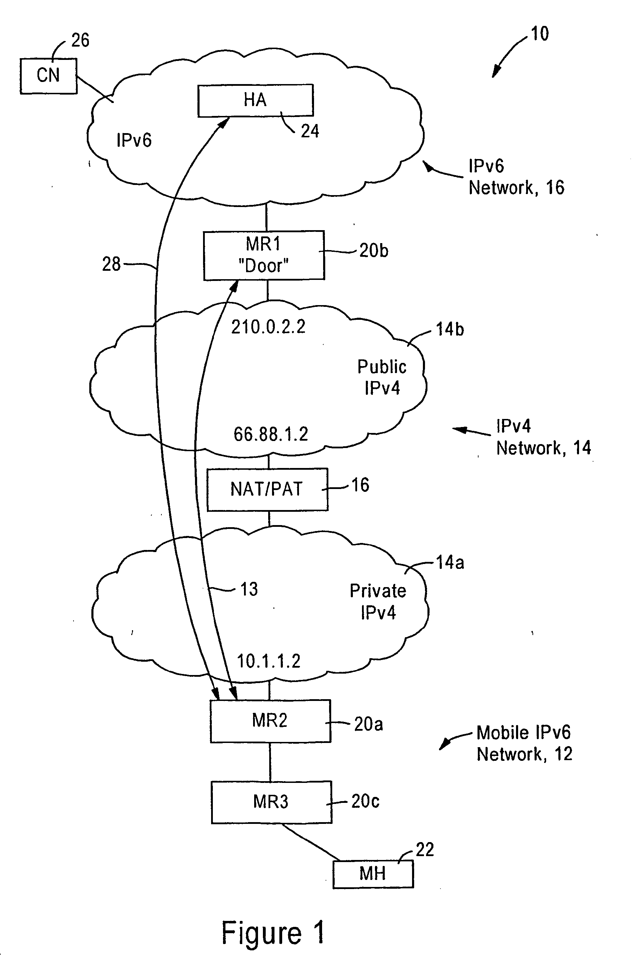

Figure 1 is a diagram (reproduced from the parent application) illustrating a network 10, where a mobile IPv6 network 12 is configured for establishing an IPv4 tunnel 13 across an IPv4 network 14 to a destination IPv6 network 16. In particular, the mobile network 12 includes at least a mobile router (MR) 20a configured for sending and receiving packets according to IPv6 protocol.

The mobile router 20a also is configured for communications with a corresponding home agent (HA) 24 configured for forwarding packets, addressed to the mobile router home address, to the mobile router 20a's care of address (CoA), according to Mobile IP Protocol as described in an IETF Draft by Johnson et al. , entitled"Mobility Support in IPv6", January 20,2003, available on the World Wide Web at http://www. ietforg/internet-drafts/draft-ietf mobileip-ipv6-21. txt .

The mobile router 20a ("MR2") may roam as a single roaming mobile router, or may be the top-level mobile router (TLMR) of a mobile network 12 having attached IPv6 nodes. As illustrated in Figure 1, the mobile router 20a serves as a TLMR in the mobile network 12 for a mobile router 20c ("MR3") and a mobile host (MH) 22.

The mobile router 20a is configured for establishing a bidirectional tunnel 28 with its corresponding home agent (HA) 24, enabling packets sent to the home address of the mobile router 20a (e.g., by a correspondent node (CN) 26) to be forwarded by the home agent 24 to the care of address for the mobile router 20a.

Since the source mobile router 20a is attached to an IPv4 network 14, as opposed to an IPv6 router, the source mobile router 20a also is configured for establishing an IPv4 tunnel 13 (e.g., a UDP tunnel) with a corresponding IPv6 destination mobile router ("MR1") 20b, also referred to as a "door" mobile router or an IPv6 gateway, having a connection on the IPv4 network 14. Hence, the mobile router 20a is configured for implementing the bidirectional tunnel 28 with its corresponding home agent 24 via the IPv4 tunnel 13, using the door mobile router 20b as an endpoint in the IPv4 tunnel 13.

The IPv4 network 14 may optionally include a Network Addres Translator (NAT) and/or a Port Address Translator (PAT) 16. As illustrated in Figure 1, the mobile router 20a is attached to a private IPv4 network 14a: the mobile router 20a may obtain its IPv4 address (e.g., "10.1.1.2") based on a prior configuration (static or unnumbered), Dynamic Host Configuration Protocol (DHCP), or IP Control Protocol (IPCP) for Point-to-Point protocol (PPP) links. The private IPv4 network 14a has access to the network address translator (NAT) 16 having a Port Address Translator (PAT) to enable nodes in the private network 14a to be addressable in the public IPv4 network 14b.

The mobile router 20a also is configured to access the door mobile router 20b at a predetermined IPv4 address (e.g., "210.0.2.2"), and a prescribed door port (e.g., UDP port "434") enabling the mobile router 20a to establish the IPv4 tunnel 13 with the door mobile router 20b without the necessity of any discovery protocols. Note that the mobile router 20a may be configured to store a plurality of door IPv4 addresses for multiple door mobile routers, in which case the mobile router 20a could be configured to locate an optimum door mobile router.

As described above, a problem with establishing an IPv4 tunnel traversing the NAT/PAT 16 is that symmetric NATs 16 index their address translation tables not only by private IP address/private UDP port/ public IP address/ public UDP port of the packet being translated for a private IPv4 node (in this case the mobile router 20a), but also by the destination IP address and destination port for an ingress packet from the public IPv4 network to the door mobile router 20b.

According to the disclosed embodiment, the mobile router 20a is configured for initiating the bidirectional IPv4 tunnel 13 using the same source/destination IPv4 address pair, ensuring that the IPv4 tunnel endpoints 20a and 20b remain the same. Since the endpoints remain the same, the bidirectional IPv4 tunnel 13 can be reliably maintained across the NAT 16 for multiple IPv6 data streams.

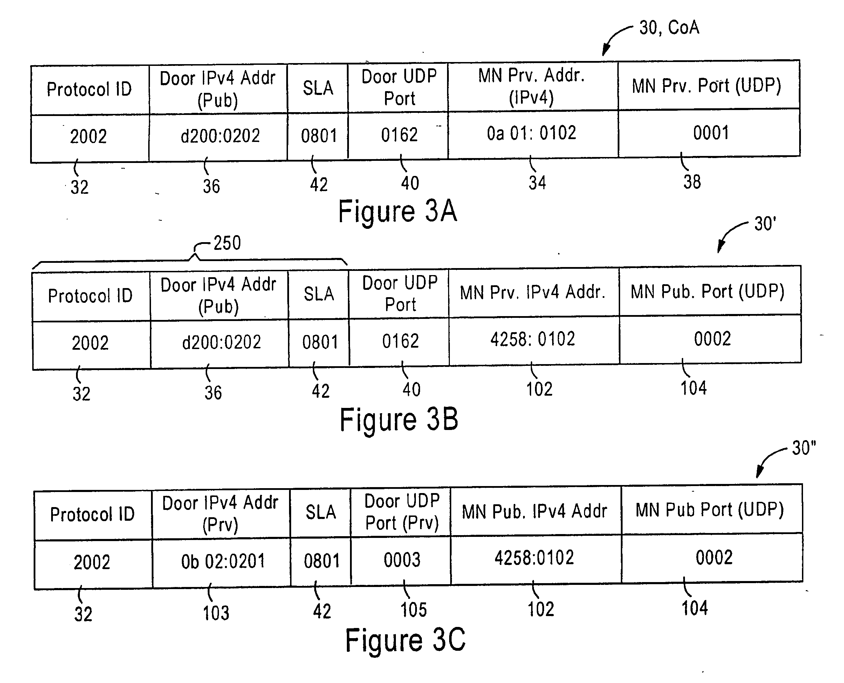

Further, the mobile router 20a utilizes a care-of address that includes all necessary routing information to enable any IPv6 packet specifying the care-off address as its destination to reach the IPv6 gateway 20b according to existing routing protocols, and for enabling the IPv6 gateway 20b to forward the IPv6 packet to the mobile router 20a via the IPv4 tunnel 13. As described below with respect to Figure 3A, the mobile router 20a is configured for generating in IPv6 tag address 30 that includes a prescribed protocol identifier 32: the protocol identifier 32 is used by the IPv6 gateway 20b to identify that the IPv6 packet 30, received via the IPv4 network 14, is to be transferred to the IPv6 network 16.

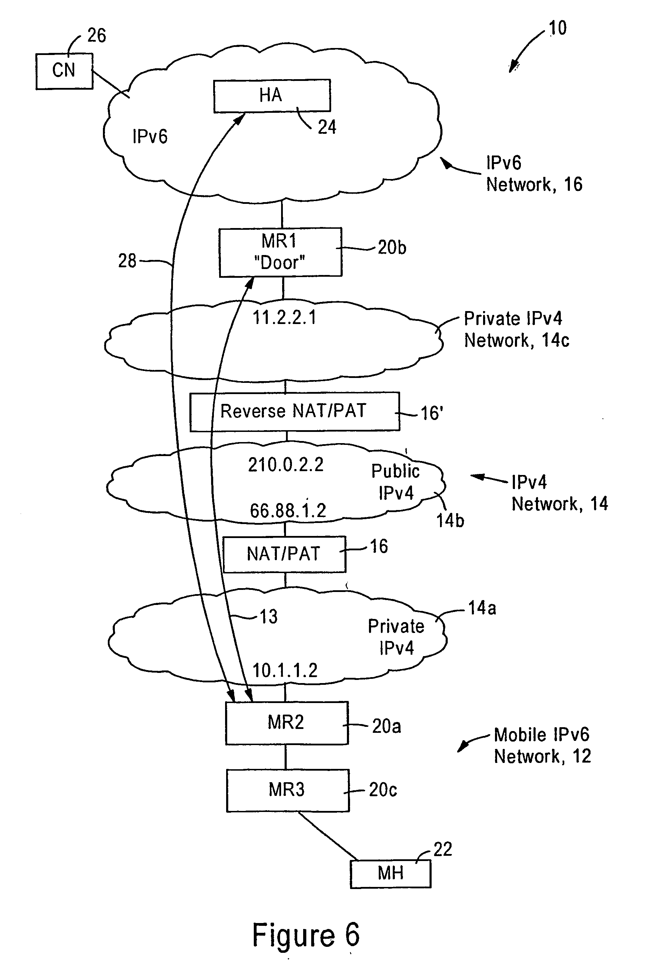

Figure 6 is a diagram illustrating a variation of Figure 1, where the IPv6 gateway 20b is in a private domain of a private IPv4 network 14c instead of the public IPv4 network 14b of Figure 1. In this case, the NAT 16' at the would own the public address ("210.0.2.2") that is seen as the door address by the MN. The NAT 16' is preconfigured to 'reverse NAT' all traffic for the UDP port / public address to the private address ("11.2.2.1") of the door 20b. Hence in this case both source IPv4 address 102 and destination IP address 103 (and source UDP port 104 and destination UDP port 105) should be overwritten by the door 20b into the IPv6 tag address 30, as illustrated in Figure 3C, to ensure the door 20b can properly route any IPv6 packet using the modified IPv6 tag address 30".

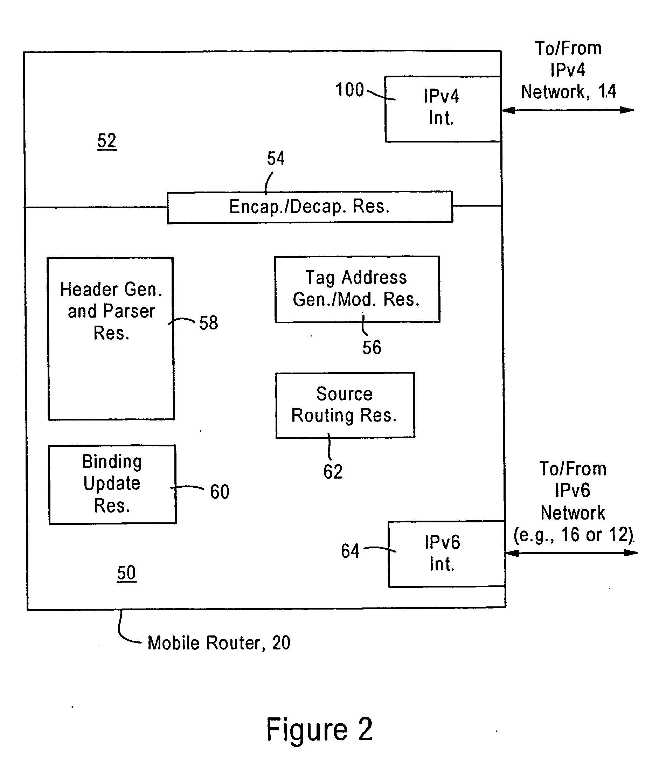

Figure 2 is a block diagram illustrating a mobile router 20 (e.g., 20a, 20b, or 20c) configured for sending packets according to mobile IPv6 protocol, as well as serving as an endpoint for an IPv4 tunnel 13. The mobile router 20 includes an IPv6 portion 50, an IPv4 portion 52, and an encapsulation/decapsulation resource 54.

The IPv6 portion 50 includes a tag address generation/modification resource 56, an IPv6 header generation and parser resource 58, a binding update resource 60, a source routing resource 62, and an IPv6 interface 64. The tag address generation/modification resource 56 is configured for generating the IPv6 tag address 30, illustrated in Figure 3A, when the mobile router 20 is acting as a mobile router 20a initiating a connection to an IPv6 gateway mobile router 20b via an IPv4 network 14.

As illustrated in Figure 3A, the tag address generation/modification resource 56 is configured for generating an IPv6 tag address 30 that includes a prescribed protocol identifier 32 ("2002" hexadecimal), a source IPv4 address 34 of the mobile router 20a ("0a01:0102" IPv6 hex notation, "10.1.1.2" IPv44 decimal notation) a public IPv4 gateway address 36 for the IPv6 gateway 20b ("d200:0202" IPv6 hex notation, "210.0.2.2" IPv4 decimal notation), a 16-bit Site Level Aggregation Identifier (SLA) ("0801" hex) 42 set by an administrator of the IPv4 gateway 20b (e.g., to represent a 64-bit IPv6 address for the IPv6 gateway 20b), a source UDP port 38 ("0001 "), and a prescribed public UDP port 40 ("01b2" hex, "434" decimal) for the IPv6 gateway 20b. The source IPv4 address 34 and the source UDP address 38 may be private addresses and ports, based on connecting to the private IPv4 network 14a. As described above, the public IPv4 gateway address 36 and the prescribed public UDP gateway port 40 are known by the mobile router 20a upon attachment to the network 14. If no transport layer header is used in the IPv4 tunnel 13 (e.g,. in the case where the NAT 16 does not include a PAT), then the values 38 and 40 can be set to zero.

The 16-bit protocol identifier 32, having a hexadecimal value of "2002" (0010 0000 0000 0010 binary) is used by the door mobile router 20b to identify the 6to4 protocol, namely forwarding the IPv6 packet "up" to the home agent 24 via the IPv6 network 16. In accordance with RFC 3056 and as described in the attached Appendix, the IPv6 gateway 20b recognizes the protocol identifier 32 as identifying the care-of address as a 6to4 address that specifies IPv4 address information for routing a packet across an IPv4 tunnel 13. Note that other protocol identifier values may be used as prescribed during implementation.

Hence, the IPv6 tag address 30 generated by the tag address generation/modification resource 56 serves as the care of address for the mobile router 20a while the mobile router 20a is attached to the IPv4 network 14 instead of an IPv6 attachment router.

As shown in Figure 2, the mobile router 20 also includes a header generation and parser resource 58 configured for generating an IPv6 header according to mobile IPv6 protocol. The mobile router 20 also includes a binding update resource 60 configured for sending a binding update message to its corresponding home agent 24 in response to attaching to a network, in this case a private IPv4 network 14a. The mobile router 20 also includes a source routing resource 62 configured for routing received IPv6 packets having routing headers according to Mobile IPv6 Protocol and reverse routing headers as specified by the Internet Draft by Thubert et al.

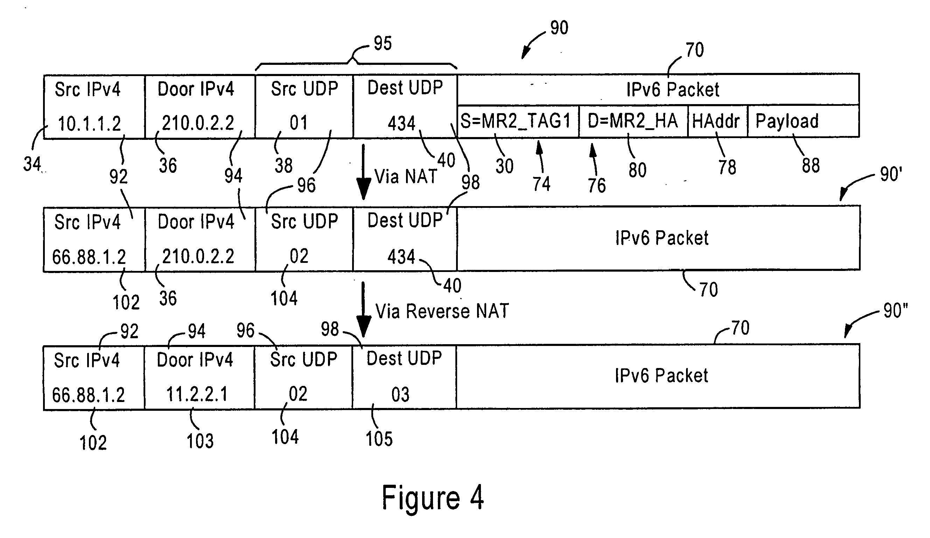

Figure 4 is a diagram illustrating an IPv4 packet 90 encapsulating IPv6 packet 70, for example a binding update message. The binding update message 70 is generated by the header generation and parser resource 58 and the binding update resource 60, for delivery to the home agent 24. The IPv6 packet 70 includes a source address field 74 specifying the care-of address 30, a destination address field 76, and in this example a destination option 78 specifying the home address (Haddr) of the mobile router 20a. The IPv6 packet 70 also includes the payload 88, in this example a binding update message. The source address field 74 specifies the tag address ("MR2_TAG1 ") 30 for the mobile router 20a, and the destination address field 76 specifies the IPv6 home agent address ("MR2_HA") 80 for the home agent 24.

Once the tag address generation/modification resource 56 in the mobile router 20a generates the IPv6 tag address 30 and the header generator 58 generates the IPv6 header 72 for the corresponding payload 88, the encapsulation/decapsulation resource 54 encapsulates the IPv6 packet 70 into an IPv4 packet 90, illustrated in Figure 4. The IPv4 packet 90 includes an IP header having a source address field 92 specifying the private IPv4 "Care-of Address" (e.g., "10.1.1.2") 34 of the mobile router 20a, and a destination address field 94 specifying the public IPv4 gateway address (e.g., "210.0.2.2") 36 of the door mobile router 20b. The IPv4 packet 90 also includes a transport header 95 that includes a source UDP port field 96 specifying a source UDP address ( "01") 38, and a destination UDP port field 98 specifying the prescribed door port 40, in this case the known mobile IP port "434". The encapsulation/decapsulation resource 54 of Figure 2 supplies the IPv4 packet 90 to an IPv4 interface 100 configured for outputting the IPv4 packet 90 onto the IPv4 network 14 according to IPv4 protocol.

As illustrated in Figure 4, the traversal of the IPv4 packet 90 via the NAT 16 from the private network 14a to the public network 14b causes the NAT/PAT 16 to modify the IPv4 packet 90 into a translated packet 90'. In particular, the NAT/PAT 16 translates the values 34 and 38 in the source address field 92 and the source port field 96 with a public IPv4 address value (e.g., "66.88.1.2") 102 and a public port ("02") 104, respectively. Hence, the door mobile router 20b receives the translated packet 90' via the public IPv4 network 14b.

As illustrated in Figure 6, if the door mobile router 20b is behind a second NAT/PAT 16', also referred to as the reverse NAT/PAT 16', then the NAT/PAT 16' translates the values 36 and 40 in the destination address field 94 and the destination port field 98 with a private IPv4 address value (e.g,. "11.2.2.1") 103 and a private port ("03") 105, respectively. Hence, the door mobile router 20b of Figure 6 receives the translated packet 90" via the private IPv4 network 14c.

The door mobile router 20b is configured to recognize itself as being a door mobile router configured for sending IPv6 packets between the IPv6 network 16 and the IPv4 network 14. Hence, the IPv4 interface 100 of the door mobile router 20b of Figure 2 is configured for forwarding the translated packet 90' to the encapsulation/decapsulation resource 54 in response to detecting the prescribed public gateway UDP port 40 having the value "434" in the destination port field 98.

In the case of Figure 6 where the door mobile router resides in the private IPv4 network 14c, the IPv4 interface 100 may be configured for forwarding the translated packet 90" to the encapsulation/decapsulation resource 54 in response to detecting the prescribed private gateway UDP port 105 having the value "03" in the destination port field 98. The resource 54 decapsulates the IPv6 packet 70 by stripping off the IPv4 header, and forwarding the IPv6 packet 70 to the IPv6 module 50.

The header generation and parser resource 58 parses the IPv6 header. In response to detecting the protocol identifier 32 in the IPv6 tag address 30 in the source address field 74, the header generation and parser resource 58 issues a function call to the tag address generation/modification resource 56. In the case of Figure 1, the tag address generation/modification resource 56 can merely modify the IPv6 tag address 30 by overwriting the private source IP address 34 and the private source UDP port 38 specified in the IPv6 tag address 30 with the respective translated public values 102 and 104, resulting in a modified IPv6 tag address 30' of Figure 3B that specifies the public IPv4 address ("4258:0102" IPv6 hex notation, "66.88.1.2" IPv4 decimal notation) 102 of the mobile router 20a, the public UDP port ("02") 104 of the mobile router 20a, and the public IP address36 and UDP port 40 for the door mobile router 20b.

Since the door mobile router may be in a private network 14c, preferably the tag address generation/modification resource 56 also should overwrite the door IP address 36 and the door UDP port 40 specified in the received IPv6 tag address with the respective translated private values 103 an5 104, resulting in a modified IPv6 tag address 30" of Figure 3C that specifies the private IPv4 address ("0b02:0201" IPv6 hex notation, "11.2.2.1" IPv4 decimal notation) 103 of the door mobile router 20b, the private UDP port ("03") 105 of the mobile router 20a, and the public IP address 102 and UDP port 104 for the mobile router 20a.

Hence, the modified IPv6 tag address 30' (for Figure 1) or 30" (for Figure 6) includes all parameters necessary for the door mobile router 20b to encapsulate an IPv6 packet to be forwarded to the mobile router 20a via the IPv4 network 14.

The IPv6 interface 64 of the door mobile router 20b outputs the modified IPv6 packet (having the modified IPv6 source address 30' or 30") to the home agent 24 via the IPv6 network 16. The home agent 24 receives the modified IPv6 packet in response to detecting the home agent address value (MR2_HA) 80 in the destination address field 76. The home agent 24 reads Mobile IPv6 home address destination option 78 (i.e., as an index into the binding cache). The home agent 24 can then identify the binding update request 88, and store the modified tag address 30' or 30"as the "care of address" for the mobile router 20a in its corresponding binding cache entry. Hence, the traversal of the IPv4 network 14 can be transparent to the home agent 24.

The home agent 24 now can send a packet directly back via the tunnel 28 by specifying the modified care-of address 30' or 30" in the destination address field. The home agent 24 inserts its home agent IPv6 address (e.g., "MR2_HA") 80 in the source address field, the modified care of address 30' or 30" in the destination address field, and a type 2 routing header that specifies the home address for the mobile router 20a. The home agent 24 then outputs onto the IPv6 network 16 the packet that includes the binding acknowledgment payload 116.

The IPv6 gateway 20b will have advertised on the IPv6 network, using existing routing protocols, that IPv6 addresses having the address prefix "2002:d200:0202/48" (for Figure 1) or "2002:0b02:0201/48" (for Figure 6) should be routed to the IPv6 gateway 20b. Hence, the modified care-of address 30' and 30" (as well as the original care of address 30) are routable to the IPv6 gateway 20b. Consequently, the packet from the home agent 24 is routed to the IPv6 gateway 20b using existing routing protocols. Note that if the address prefix is based on a private address as in the case of Figure 6, then prefix distribution needs to be limited accordingly.

The door mobile router 20b, in response to receiving the IPv6 packet from the home agent 24, uses its header generation and parser resource 58 to parse the routing header 114. In response to detecting the protocol identifier 32 in the modified IPv6 tag address 30' or 30", the door mobile router 20b utilizes its encapsulation/decapsulation resource 54 to generate an IPv4 header that specifies the public address 102 and public port 104 of the mobile router 20a in the respective destination headers. The IPv4 interface 100 outputs the packet onto the bidirectional tunnel 13.

The IPv4 packet, having been translated by the NAT/PAT 16, specifies the private IP address 34 and the private UDP port 38 in the destination address and destination port fields, respectively. The mobile router 20a can then recover the IPv6 packet 112 based on identifying the source UDP port specifying the public door UDP value 40. As described below, the mobile router 20a also overwrites the mobile node IPv4 address value 102 and the public UDP port value 104 in the received care-of address 30' with the private IP address 34 and the private UDP port 38. The mobile router 20a also should overwrite the door IPv4 address value 103 and the UDP port value 105 in the received care-of address 30' with the public IP address 36 and the public door port 40 in case the door 20b is accessed via the reverse NAT (as in Figure 6).

If the overwriting operation does not result in recovery of the mobile router 20a's care of address 30, the packet is dropped; if the mobile router 20a's care of address 30 is recovered from the overwriting operation, the mobile router 20a processes the received IPv6 packet accordingly. For example, if a type 2 routing header is present, the mobile router 20a processes the packet accordingly: if the type 2 routing header specifies the home address for the mobile router 20a, the mobile router 20a forwards the payload to its upper layer protocol; if another IPv6 address is specified in the type 2 routing header (e.g., for mobile router 20c or mobile host 22), the mobile router 20a forwards the payload to the source routing resource 62 for further routing.

Since the Care Of address can be translated by the mobile router 20a and the IPv6 gateway 20b, problems may arise with Authentication Header (AH) and upper layer checksum computations if the Care Of address was included in the signed information. As a result, the reference packet for AH is always a packet where the IPv6 source and destination addresses are the Home Address of the mobile node and the address of the home agent, and the slots and segment left of a Routing Header are set to 0.

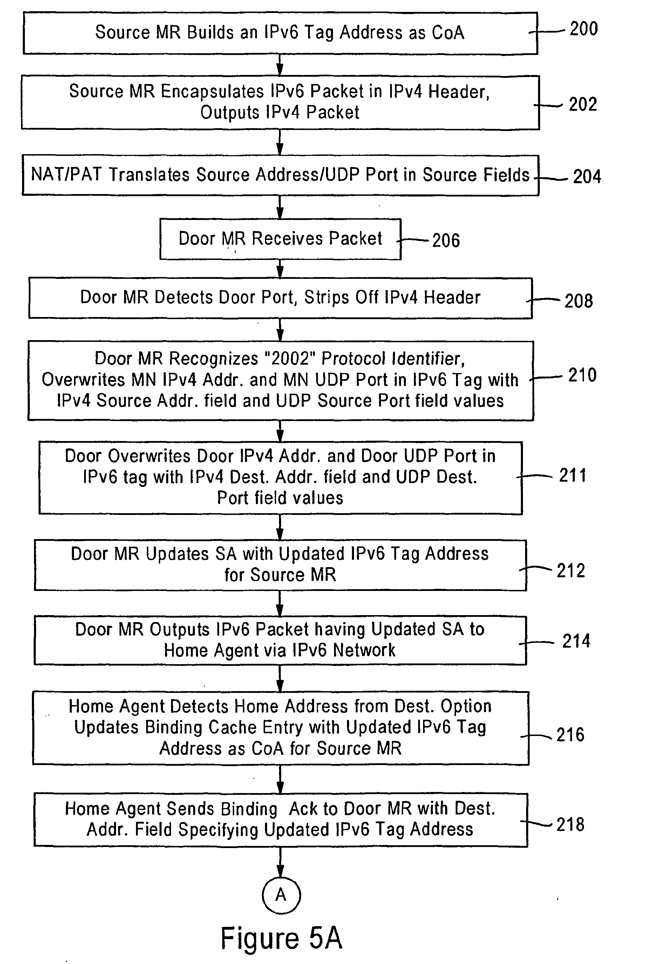

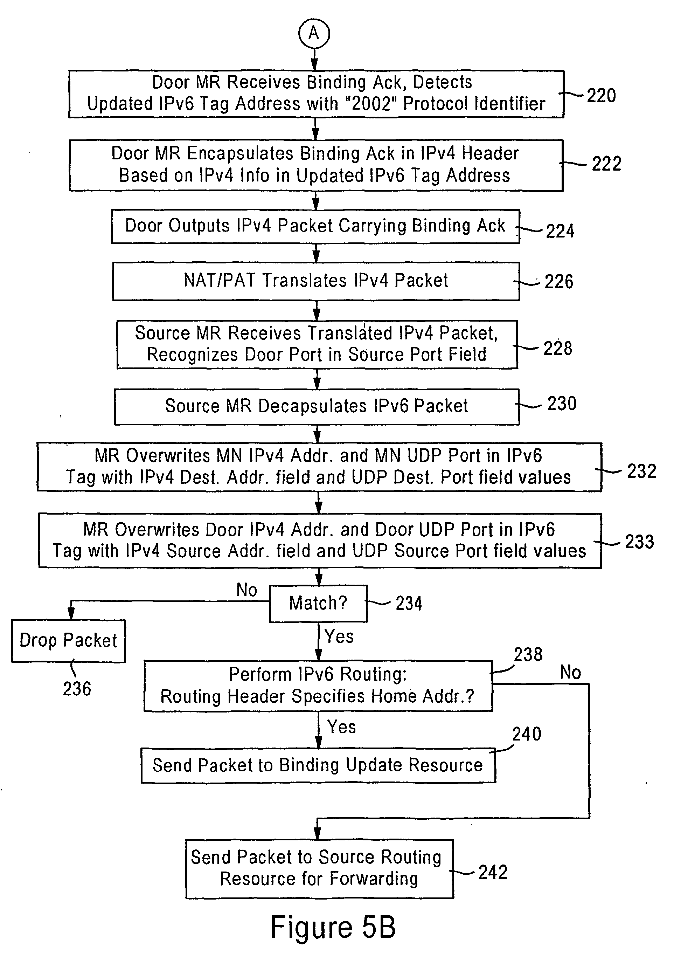

Figures 5A and 5B are diagrams illustrating the method of sending IPv6 packets via an IPv4 tunnel according to an embodiment of the present invention. The steps described herein with respect to Figures 5A and 5B can be implemented in the respective mobile routers as executable code stored on a computer readable medium (e.g., floppy disk, hard disk, EEPROM, CD-ROM, etc.), or propagated via a computer readable transmission medium (e.g., fiber optic cable, electrically-conductive transmission line medium, wireless electromagnetic medium, etc.).

The method begins in step 200, where the tag address generation resource 56 of the source mobile router 20a builds the IPv6 tag address 30 of Figure 3A as its care of address. The encapsulation/decapsulation resource 54 of the source mobile router 20a encapsulates in step 202 the IPv6 packet 70 in an IPv4 header, and outputs the IPv4 packet 90 onto the private IPv4 network 14a. The NAT/PAT 16 translates in step 204 the private source address 34 and private UDP port 38 from the source address field 92 and the source port field 96 into the public IP address 102 and the public port 104, respectively, and outputs the translated IPv4 packet 90'.

The door mobile router 20b receives in step 206 the translated IPv4 packet 90'. The IPv4 interface 100 of the door mobile router 20b detects in step 208 the door port value ("434") 40 specifying mobile IP, and in response the encapsulation/decapsulation resource 54 strips the IPv4 header. The header generation and parser resource 58 of the door mobile router 20b detects in step 210 the protocol identifier 32 in the IPv6 tag address 30, and in response the tag modification resource 56 modifies the IPv6 tag address 30 by overwriting the private IPv4 address 34 and UDP port 38 of the source MR 20a with the public IPv4 address 102 and UDP port 104, respectively; the door IPv4 address 36 and the door UDP port 40 also may be overwritten in step 211 with the values in the destination port field 94 and the UDP port field 98 in case the door 20b is within the private address space of the private IPv4 network 14c (as illustrated in Figure 6).

The header generation and parser resource 58 of the door mobile router 20b updates in step 212 the source address field with the updated IPv6 tag address 30' or 30". The IPv6 interface 64 of the door mobile router 20b outputs in step 214 the modified IPv6 packet 70' to the home agent 24 via the IPv6 network 16.

The home agent 24 detects in step 216 the home address 86 of the source mobile router 20a from the destination options field 78, and responds to the binding update 88 by updating the binding cache entry for the source mobile router 20a to specify the updated IPv6 tag address (MR2_TAG2) 30' or 30" as the care of address for the source mobile router 20a. The home agent outputs in step 218 the binding acknowledgment 112 that includes the destination address field specifying the updated IPv6 tag address 30' or 30"and a type 2 routing header specifying the home address for the source mobile router 20a.

Referring to Figure 7B, the door mobile router 20b receives in step 220 the binding acknowledgment message. The parser resource 58 of the door mobile router 20b detects the updated IPv6 tag address 30' in the destination address field that specifies the protocol identifier 32.

The door mobile router 20b responds to the protocol identifier 32 in accordance with RFC 3056, and in response checks whether it has an IPv6 connected route to its 64-bit address prefix 250 ("2002:d200:0202:0801/64"): if an IPv6 route is detected in its routing tables, the door mobile router 20b encapsulates the binding acknowledgment message in an IPv4 header based on the public address 102 and the public port 104 specified in the care of address 30' for the source mobile router 20a. The door mobile router 20b outputs in step 224 the IPv4 packet carrying the binding acknowledgment.

After the NAT/PAT 16 translates the destination public address 102 and the destination public port 104 of the mobile router 20a to the respective private address 34 and private port 38 in step 226, the source mobile router 20a receives the translated IPv4 packet in step 228. The IPv4 interface 100 of the source mobile router 20a recognizes the prescribed door port 40 in the source port field, and in response the encapsulation/decapsulation resource 54 of the source mobile router 20a decapsulates the IPv6 packet in step 230.

The tag address generation and modification resource 56 overwrites in step 232 the public address 102 and the public port 104 in the care of address 30' or 30" specified in the destination address field of the IPv6 packet with the destination IPv4 address value and the destination UDP port specified in the IPv4 header. The tag address and modification resource 56 also should overwrite in step 233 the door IPv4 address and the door UDP port specified in the care of address 30" with the source IPv4 address value and the source UDP port value specified in the IPv4 header in the event that the door 20b is within the private address realm of the private IPv4 network 14c, where the reverse NAT 16' translates the source IPv4 address values and the source UDP port values.

If in step 234 the overwriting operation does not result in a match with the care of address 30 for the mobile router 20a, the packet is dropped in step 236. If in step 234 the overwriting results in a match, the mobile router 20a reintroduces in step 238 the IPv6 packet into the IPv6 fabric. For example, if in step 238 the type 2 routing header specifies the home address of the mobile router 20a, the binding acknowledgment 116 is logged in step 240 by the binding update resource 60 in the source mobile router 20a. Alternatively, if in step 238 the type 2 routing header specifies another address indicating that the received IPv6 packet is destined to another mobile node such as the mobile router 20c or the mobile host 22, the mobile router 20a uses the source routing resource 62 in step 242 to forward the IPv6 packet according to mobile IPv6 protocol.

According to the disclosed embodiment, IPv6 mobile routers can efficiently establish tunnels across an IPv4 network for transfer of IPv6 packets, regardless of whether the IPv4 network utilizes symmetric NATs. The IPv4 tunnel is always started by the MR sending the binding update: hence, the IPv4 tunnel is always available because the MR knows that it has its own tunnel at any point in time. If the binding update is sent often enough for the resource to maintain the path, then the path will remain active simply by default execution of Mobile IP protocol by the MR. Hence, the IPv4 tunnel is always active with no extra processing resource cost.

In addition, there is no need for the door mobile router to maintain any state, or store any information about the mobile router roaming through it, because all the necessary IPv4 routing information is in the packet. Further, the IPv4 routing information is stored in the binding cache of the home agent. Hence, when the IPv4 routing information is no longer valid, the binding cache is automatically cleared by the home agent, eliminating the possibility of any invalid state in the IPv6 network. Hence there is no need to remove obsolete information in the network due to an invalid state (e.g., in a gateway, server, etc.).

Further, the IPv4 tunnel from the MR to the door via the NAT uses the same UDP porthence, a single resource in the NAT/PAT can be used for all the mobile routers which are attached to the TLMR 20a, eliminating the use of multiple resources in the NAT/PAT. Note that if the network does not have a PAT such that no transport header values are necessary for the tunnel 13, the UDP source and door port values 38 and 40 can be zeroed out the port fields in the tag 30.

Finally, the disclosed arrangement eliminates the necessity of a reverse routing header, enabling the tunneling over the IPv4 network to be implemented between an IPv6 mobile node (e.g., mobile host computer) and an IPv6 router that does not have Mobile IP capabilities. As such, the forwarding of packets via the IPv4 network is transparent to the IPv6 interfaces of the IPv4 endpoints. Moreover, use of the protocol identifier and the public IPv4 address of the IPv6 gateway as an address prefix enables the Care of address to be a valid IPv6 address reachable via the IPv6 gateway. Hence, the home agent can be separate from the IPv6 gateway. Note that the disclosed arrangement also can be used solely with private addresses if the IPv6 gateway and the home agent reside within the same IPv4 address realm.

While the disclosed embodiment has been described in connection with what is presently considered to be the most practical and preferred embodiment, it is to be understood that the invention is not limited to the disclosed embodiments, but, on the contrary, is intended to cover various modifications scope of the appended claims.

### APPENDIX TO PATENT APPLICATION "ARRANGEMENT FOR TRAVERSING AN IPv4 NETWORK BY IPv6 MOBILE NODES" (Atty. Docket 10-000, 15 Pages)

| | |
|---|---|
| Network Working Group | P. Thubert |
| Internet-Draft | M. Molteni |
| Expires: October 29, 2003 | P. Wetterwald |
| | Cisco Systems |
| | April 30, 2003 |

### IPv4 traversal for MIPv6 based Mobile Routers draft-thubert-nemo-IPv4-traversal-01

### Status of this Memo

This document is an Internet-Draft and is in full conformance with all provisions of Section 10 of RFC2026.

Internet-Drafts are working documents of the Internet Engineering Task Force (IETF), its areas, and its working groups. Note that other groups may also distribute working documents as Internet-Drafts.

Internet-Drafts are draft documents valid for a maximum of six months and may be updated, replaced, or obsoleted by other documents at any time. It is inappropriate to use Internet-Drafts as reference material or to cite them other than as "work in progress."

The list of current Internet-Drafts can be accessed at http:// www.ietf.org/ietf/lid-abstracts.txt.

The list of Internet-Draft Shadow Directories can be accessed at http://www.ietf.org/shadow.html.

This Internet-Draft will expire on October 29, 2003.

### Copyright Notice

Copyright (C) The Internet Society (2003). All Rights Reserved.

### Abstract

Since IPv6 connectivity is not yet broadly available, there is a need in NEMO for a simple technology that allows a MIPv6 based Mobile Router to roam over IPv4 networks.

The Doors Protocol proposed in this memo allows an arbitrary Mobile Node to roam even within private IPv4 address spaces, across both Network Address Translations (NAT), reverse NAT, and even Port Address Translation (PAT), in order to cope with the reality of today's Internet.

**Table of Contents**

| | | |
|---|---|---|
| 1. | Introduction | 3 |
| 2. | Terminology and concepts | 3 |
| 2.1 | Doors Handle | 3 |
| 2.2 | Other definitions | 5 |
| 3. | MIPv6 Doors support | 5 |
| 3.1 | Known Restrictions | 7 |
| 3.2 | Operation for a MIPv6 Mobile Node roaming over IPv4 | 7 |
| 3.2.1 | MR Sending packets over the Doors tunnel | 8 |
| 3.2.2 | MR Receiving packets over the Doors tunnel | 9 |
| 3.3 | Operation for the Door | 9 |
| 3.3.1 | Door Receiving packets over the Doors tunnel | 10 |
| 3.3.2 | Door Sending packets over the Doors tunnel | 11 |
| 3.4 | Advantages of the Doors protocol | 12 |
| 4. | IANA considerations | 12 |
| 5. | Acknowledgements | 12 |
| | References | 12 |
| | Authors' Addresses | 14 |
| | Full Copyright Statement | 15 |

### 1. Introduction

This document assumes that the reader is familiar with Mobile IPv6 defined in [12], with the concept of Mobile Router (MR) and with the Nemo terminology defined in [13], as well as IPv4 Network Address Translation (NAT) and Port Address Translation (PAT).

During the transition phase from IPv4 to IPv6, hot spots that actually provide IPv6 connectivity will be scarce and Mobile Routers should support an alternate roaming technology over IPv4.

There is an existing panel of solutions from the V6 ops (ISATAP, 6to4, TEREDO), but these solutions fail to traverse in a simple fashion all types of NAT and PAT that are heavily deployed today. There is a real value in combining MIPv6 and IPv4 traversal technologies. MIP brings a MN-HA tunnel and a binding cache into the picture, as well as a keep alive procedure. The MIP cache can be used to store the PAT/NAT states, while the Binding flow can be tuned to keep the PAT/NAT active. As a result, it is possible for a IPv6 Mobile Router to traverse PAT/NAT with no protocol overhead or additional states in the network.

The Doors Protocol developed in this draft extends Mobile IPv6 and is more particularily aimed at the Nemo problem space. Some restrictions apply that could be circumvented by additional work.

### 2. Terminology and concepts

### 2.1 Doors Handle

Doors inherits from 6to4 [10], that uses synthetized IPv6 addresses to build automatic tunnels across IPv4. In the Doors case, that IPv6 global unicast address is named a Doors Handle. The Doors Handle follows the 6to4 formatting rules, but it points on a IPv4 (UDP) tunnel, as opposed to an interface on a machine.

Due to a NAT/PAT or reverse NAT traversal, the handle may be subject to IPv6 level Address Translation. Since we do not want to reintroduce the complexity of Application Level Gateways, the handle MUST NOT to be used as source or destination address as seen by upper layer protocols.

Rather, the only use of a Handle is as a CareOf address for Mobile IPv6 as defined in [12]. Note that some ICMP messages such as DHAAD may be need the Handle as source or destination. In that case, the ICMP layer chacksum must be updated when the Handle is modified.

The Doors Handle has the following format:

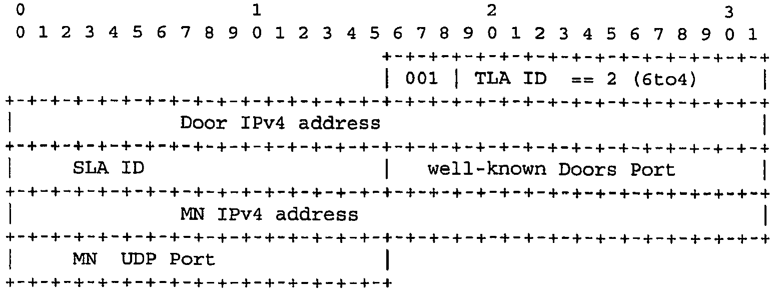

### Doors Handle

### 001

Format Prefix (3 bit) for Aggregatable Global Unicast Addresses

### TLA ID

Top-Level Aggregation Identifier (13 bits). Set to 2 as prescribed by RCF 3046 [10].

### Door IPv4 Address

32-bits public IPv4 address of the door, that the MN learns dynamically while roaming, using DHCP or IPCP extension (TBD), or that is statically configured on the MN.

### SLA ID

Site-Level Aggregation Identifier

### Doors Port

16-bits UDP Destination port. A well known value DOORSPORT to be assigned by IANA (434 in the meantime).

### Mobile Node IPv4 address and UDP port

The parameters of the socket on the MN side, generally obtained dynamically by the mobile Node.

### 2.2 Other definitions

### DoG

The Doors Gateway (DoG) is the function that terminates the Doors Tunnel on both Home and Mobile ends. The DoG performs IPv4/UDP automatic tunneling and a IPv6 level Network Address Translation.

### DooR

A Doors Router (DooR) is a router that implements the Doors Gateway. The Door is connected to the Home Network via the IPv6 infrastructure. A Home Door may be implemented at the ingress of the Home Network. But Exit Doors may also be implemented at by private networks in order to avoid IPv4 NAT and PAT operations. In that case, the IPv4 address of the Exit Door should be available dynamically, for instance by means of DHCP or IPCP extensions.

### Doors Tunnel

The Doors Tunnel is an IPv4/UDP automatic tunnel that encapsulates a Mobile IPv6 tunnel. The Tunnel has two Directions, InDoors and OutDoors.

### InDoors and OutDoors

A packet going InDoors flows between the Mobile Node and the Door. A packet going OutDoors flows between the Door and the Mobile Node. In both cases, the packet is formed by an IPv6 packet that is encapsulated over IPv4 and UDP. A packet flowing InDoors as a source IPv6 address that is a Doors Handle. Reciprocally, a packet flowing OutDoors as a destination IPv6 address that is a Doors Handle. InDoors and OutDoors are mutually exclusive.

### Doors Prefix

The prefix of a Doors Handle. It is a /64 prefix built with the Door IPv4 address an an arbotrary the SLA ID. This prefix is assigned to the interface that owns the associated IPv4 address. if the IPv4 address is private, the prefix distribution MUST be limited accordingly, which prevents Route Optimization.

### 3. MIPv6 Doors support

With Doors, a roaming MIPv6 Mobile Node generates a Doors Handle and uses it as CareOf to Bind over a Doors Tunnel to its Home Agent.

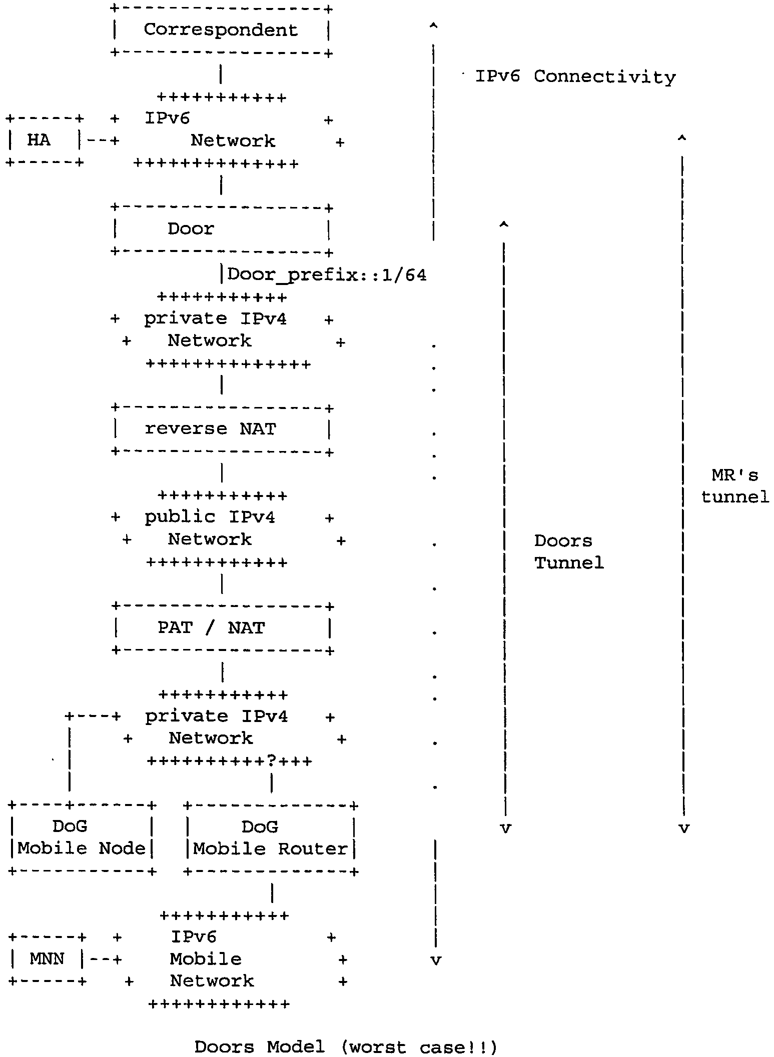

### 3.1 Known Restrictions

Since the CareOf can be translated on the way, it may cause problems to Authentication Header and upper layer checksum computations. So the CareOf can not be included in the signed information. As a result, the reference packet for AH is always a packet where the IPv6 source and destination addresses are the Home Address of the MN and the address of the HA, and the slots and segment left of a Routing Header are set to 0. This is true for RH type 2 and the Reverse Routing Header defined in [14].

In any case, the Doors prefix must be reachable at IPv6 level from the Home Agent, and from the Correspondent Nodes in case of Route Optimization (RO). This is why RO may not be possible if the Handle is based on a private address, which may occur if the Door is behind a reverse NAT.

### 3.2 Operation for a MIPv6 Mobile Node roaming over IPv4

A MN roaming generates its Doors Handle as follows:

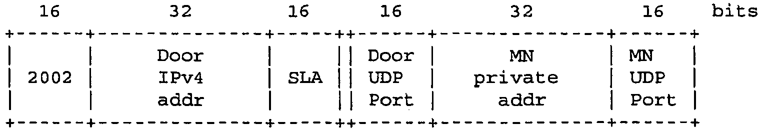

### MR Doors Handle

Door IPv4 address: the public address of the door.

### Doors Port: DOORSPORT

MN IPv4 address: the private IPv4 CoA obtained by the mobile router on his roaming interface by any mechanism (configuration, DHCP, IPCP, ...). Maybe private.

MN UDP port: A value chosen dynamically by the Mobile Node. It may be a signature used for verification purposes.

The Mobile Node may recompute a new port periodically, build a new CareOf and rebind.

The Mobile Node MUST be tuned to send Binding Updates often enough to make sure that the NAT/PAT states are kept alive. As a result, there is no additional control traffic for that purpose.

### 3.2.1 MR Sending packets over the Doors tunnel

The Doors Tunnel can be seen as an internal hop between the Mobile Node and its CareOf. With that acceptation, the MIPv6 model, between the CareOf and either the Home Agent or an arbitrary Correspondent Node, still applies.

When sending or forwarding a IPv6 packet with a Source address that is a Doors Handle, a Mobile Node MUST encapsulate the packet into a IPv4/UDP tunnel using the following settings:

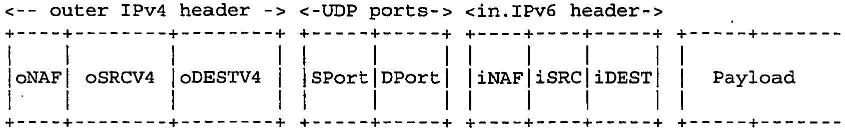

### InDoors Packet

NAF represents the Non-Address Fields of a IP header
Sport is the UDP Source port, set to the MN UDP port from the Handle
DPort is the UDP Destination Port, set to the Doors Port from the Handle
SRCV4 is the Source IPv4 address, set to the MN IPv4 address from the Handle
DESTV4 is the Destination IPv4 address, set to the Door IPv4 address from the Handle.
SRC is the IPv6 Source Address, set to CoA == Doors Handle
DEST is the Home Agent Address
The Payload may be Home Address Dest Option and a Mobility Header or a IPv6 packet from a Node in the Mobile Network

This causes packets in the MN-HA tunnel to be automatically reencapsulated into an IPv4/UDP tunnel to the HA IPv4 address, as long as the CareOf Address is a Doors Handle.

Fragmentation may occur at IPv6 and/or at IPv4 encapsulation level. the rules defined in [7] and [10] apply respectively.

### 3.2.2 MR Receiving packets over the Doors tunnel

The process of terminating the Doors tunnel on the MN side is:
Decapsulating the IPv6 packet from the IPv4/UDP encapsulation
Recomposing the original IPv6 address as known on the MN side.
Recomputing the checksum of ICMP messages.

When receiving a packet over UDP with Source Port equal to DOORSPORT, a Mobile Node checks whether there's an inner IPv6 packet with a Destination IPv6 address that is actually a Doors Handle.

If so, the MN restores it by:
Overwriting the MN IPv4 address and UDP port fields with the IPv4 Destination information from the received packet
Overwriting the Door address and UDP port field with the UDP Source information from the received packet

If the generated Doors Handle does not match its CareOf, the node drops the packet.

Otherwise, the node decapsulates the UDP tunnel and receives the resulting IPv6 packet. The next step is either yet an other level of decapsulation, or, if a RH type 2 is present, a forwarding to the next hop in the RH, that should be the node's home address.

This causes the MN-HA tunnel to be automatically decapsulated from an IPv4/UDP tunnel as long as the Doors Handle is the CareOf.

### 3.3 Operation for the Door

The Door does not need to keep any PAT/NAT related state since that information is stored as CareOf in the Binding Cache by the Home Agent and the Correspondent Nodes.

The Binding Cache Entries are created regarlessly whether the CareOf is a Handle or a plain IPv6 address. As a result, the gating factor to Doors scalability is MIP itself.

When the support of Door is configured on a dual stack interface of a router, an IPv6 address is configured manually or automatically on that interface, based on the Door Prefix associated to the IPv4 address of that interface, with a suffix of ::1. The router MAY start redistributing the Doors prefix at that time.

### 3.3.1 Door Receiving packets over the Doors tunnel

The process of terminating the Doors Tunnel on the Door side is:
Decapsulating the IPv6 packet from the IPv4/UDP encapsulation
Translating the original source IPv6 address into an OutDoors Handle.
Recomputing the checksum of ICMP messages.

When receiving a packet over UDP with Source Port equal to DOORSPORT, the DoG function in a HA checks whether there's an inner IPv6 packet with a Source IPv6 address that is actually a Doors Handle.

If so, the Door translates the Handle by:
Overwriting the MN IPv4 address and UDP port fields with the IPv4 Source information from the received packet.
Overwriting the Door IPv4 address and UDP port fields with the IPv4 Destination information from the received packet.

As a result, the layout of the OutDoors Handle is as follows:

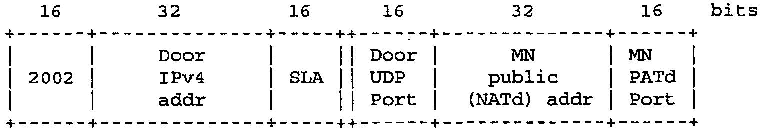

### Door Handle

### Doors Port: DOORSPORT

Door IPv4 address: The IPv4 address of the Door. Maybe private.
MN IPv4 address: the public IPv4 address of the MN.
MN UDP port: May have been PATed

After computing the OutDoors Handle, the DoG decapsulates the UDP tunnel and forwards the resulting IPv6 packet. If the HA or CN is collocated with the DoG, the packet is received, and in any case the OutDoors Handle is used as CareOf and stored in the binding cache of the destination.

### 3.3.2 Door Sending packets over the Doors tunnel

Since the Door advertises the Door prefix, and since the OutDoors Handle belongs to that prefix, normal IPv6 routing take place between the HA or CR and the Door on the way to the MN.

When forwarding a packet to a destination that is a OutDoors Handle, a router running as a Door checks whether it has an IPv6 connected route to that prefix. If so, instead of looking up the Link Layer address of the Handle, it MUST encapsulate the packet over IPv4/UDP using the following settings:

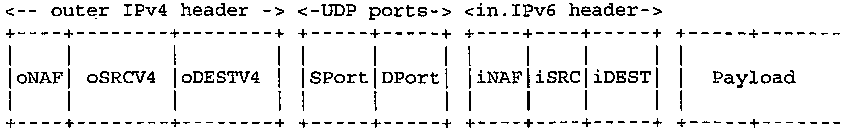

### OutDoors Packet

NAF represents the Non-Address Fields of a IP header
Sport is the UDP Source port, set to the Doors Port from the Handle
DPort is the UDP Destination Port, set to the MN UDP port from the Handle
SRCV4 is the Source IPv4 address, set to the Door IPv4 address from the Handle.
DESTV4 is the Destination IPv4 address, set to the MN IPv4 address from the Handle
SRC is the Home Agent Address
DEST is the IPv6 Source Address, set to the mapped CoA == OutDoors Handle
The Payload may start with a Routing Header of type 2, or be a IPv6 packet from a Node in the Mobile Network

When applied to Nemo, between a Mobile Router and its Home Agent, the Doors protocol maintains a single state in the PAT/NAT for all the communications of all the Mobile Network Nodes.

### 3.4 Advantages of the Doors protocol

This solution presents a number of advantages:
This solution does not keep states in the gateways. The NATed addresses are stored and maintained in the MIP binding cache, only as long as they are needed, by the Mobile IPv6 protocol. Note that in case of a symmetrical PAT, the CRs and the HAs may not see the same CareOf for a same MN.
The MN may swap its Doors Gateway whenever it needs, since this will seen as yet an other roaming. In particular, the address of a local Doors Gateway may be available in a DHCP or a IPCP extension.
The transition between Doors or between IPv4 and IPv6 roaming is smooth, handled by the DoG function, transparently to the HA and CR support.
There is only one entry in the NAT/PAT gateway for a full Nested Nemo configuration with no route optimization. This limits the size of the tables that the NAT gateway has to maintain.

### 4. IANA considerations

A port number value is required for DOORSPORT. Note that this requirement could be alleviated by a common configuration on both sides, but this makes the deployment a bit more complex.

Today we use TLA of 02 which is reserved to 6to4. We see Doors as a subset of the general 6to4 prefix, but a Door can not function as a general purpose 6to4 gateway. Is that worth using a different TLA?

### 5. Acknowledgements

The authors wish to thank:
Ole Troan, Vincent Ribiere, Massimo Lucchina, Daniel Shell, Ravi Samprathi, William Ivancic and the coffee machine for their various contributions.

### References

[1] Postel, J., "Internet Protocol", STD 5, RFC 791, September 1981.
[2] Callon, R. and D. Haskin, "Routing Aspects Of IPv6 Transition", RFC 2185, September 1997.
[3] Hinden, R. and S. Deering, "IP Version 6 Addressing Architecture", RFC 2373, July 1998.
[4] Deering, S. and R. Hinden, "Internet Protocol, Version 6 (IPv6) Specification", RFC 2460, December 1998.
[5] Narten, T., Nordmark, E. and W. Simpson, "Neighbor Discovery for IP Version 6 (IPv6)", RFC 2461, December 1998.
[6] Thomson, S. and T. Narten, "IPv6 Stateless Address Autoconfiguration", RFC 2462, December 1998.
[7] Conta, A. and S. Deering, "Generic Packet Tunneling in IPv6 Specification", RFC 2473, December 1998.
[8] Carpenter, B. and C. Jung, "Transmission of IPv6 over IPv4 Domains without Explicit Tunnels", RFC 2529, March 1999.
[9] Gilligan, R. and E. Nordmark, "Transition Mechanisms for IPv6 Hosts and Routers", RFC 2893, August 2000.
[10] Carpenter, B. and K. Moore, "Connection of IPv6 Domains via IPv4 Clouds", RFC 3056, February 2001.
[11] Vaarala, S. and O. Levkowetz, "Mobile IP NAT/NAPT Traversal using UDP Tunnelling", draft-ietf-mobileip-nat-traversal-07 (work in progress), November 2002.
[12] Perkins, C., Johnson, D. and J. Arkko, "Mobility Support in IPv6", draft-ietf-mobileip-ipv6-21 (work in progress), March 2003.
[13] Ernst, T. and H. Lach, "Network Mobility Support Terminology", draft-ernst-monet-terminology-01 (work in progress), July 2002.
[14] Thubert, P. and M. Molteni, "IPv6 Reverse Routing Header and its application to Mobile Networks", draft-thubert-nemo-reverse-routing-header-01 (work in progress), October 2002.
[15] Castelluccia, C., Malki, K., Soliman, H. and L. Bellier, "Hierarchical Mobile IPv6 mobility management (HMIPv6)", draft-ietf-mobileip-hmipv6-07 (work in progress), October 2002.
[16] Petrescu, A., "Issues in Designing Mobile IPv6 Network Mobility with the MR-HA Bidirectional Tunnel (MRHA)", draft-petrescu-nemo-mrha-02 (work in progress), March 2003.

### Authors' Addresses

Pascal Thubert
Cisco Systems Technology Center
Village d'Entreprises Green Side
400, Avenue Roumanille
Biot - Sophia Antipolis 06410
FRANCE

EMail: pthubert@cisco.com

Marco Molteni
Cisco Systems Technology Center
Village d'Entreprises Green Side
400, Avenue Roumanille
Biot - Sophia Antipolis 06410
FRANCE

EMail: mmolteni@cisco.com

Patrick Wetterwald
Cisco Systems Technology Center
Village d'Entreprises Green Side
400, Avenue Roumanille
Biot - Sophia Antipolis 06410
FRANCE

EMail: pwetterw@cisco.com

### Full Copyright Statement

Copyright (C) The Internet Society (2003). All Rights Reserved.

This document and translations of it may be copied and furnished to others, and derivative works that comment on or otherwise explain it or assist in its implementation may be prepared, copied, published and distributed, in whole or in part, without restriction of any kind, provided that the above copyright notice and this paragraph are included on all such copies and derivative works. However, this document itself may not be modified in any way, such as by removing the copyright notice or references to the Internet Society or other Internet organizations, except as needed for the purpose of developing Internet standards in which case the procedures for copyrights defined in the Internet Standards process must be followed, or as required to translate it into languages other than English.

The limited permissions granted above are perpetual and will not be revoked by the Internet Society or its successors or assigns.

This document and the information contained herein is provided on an "AS IS" basis and THE INTERNET SOCIETY AND THE INTERNET ENGINEERING TASK FORCE DISCLAIMS ALL WARRANTIES, EXPRESS OR IMPLIED, INCLUDING BUT NOT LIMITED TO ANY WARRANTY THAT THE USE OF THE INFORMATION HEREIN WILL NOT INFRINGE ANY RIGHTS OR ANY IMPLIED WARRANTIES OF MERCHANTABILITY OR FITNESS FOR A PARTICULAR PURPOSE.

### Acknowledgement

Funding for the RFC Editor function is currently provided by the Internet Society.

## Claims

1. A method in an IPv6 mobile node (20a), the method including:
first generating an IPv6 tag address (30) comprising a globally routable address prefix for an IPv6 gateway (20b), the address prefix of the IPv6 tag address (30) including an IPv4 gateway address (36) for the IPv6 gateway (20b) and a protocol identifier (32) for identifying to the IPv6 gateway (20b) a protocol for transferring packets from an IPv4 network (14) to an IPv6 network (16) or from the IPv6 network (16) to the IPv4 network (14);
second generating an IPv6 packet (70) having a source address field (74) that specifies the IPv6 tag address (30), and a header that specifies a home address assigned to the IPv6 mobile node (20a);
encapsulating the IPv6 packet (70) in an IPv4 packet (90) having an IPv4 header including a destination address field (94) that specifies the IPv4 gateway address (36), a source address field (92) specifying a mobile node IPv4 address (34) for the IPv6 mobile node (20a), and a transport header (95) having a source port field (96) specifying a prescribed UDP port (38) for the IPv6 mobile node (20a), and a destination port field (98) specifying a prescribed UDP port (40) for the IPv6 gateway (20b) used for identifying transfer of the IPv6 packet (70) between the IPv4 network (14) and the IPv6 network (16); and
outputting the IPv4 packet (90) to the IPv6 gateway (20b) via the IPv4 network (14), for transfer of the IPv6 packet (70) onto the IPv6 network (16).

2. The method of claim 1, wherein the protocol identifier and IPv4 gateway address form the address prefix for the IPv6 gateway.

3. The method of claim 2, wherein the first generating step includes:
specifying the protocol identifier at a beginning of the IPv6 tag address, contiguously followed by the IPv4 gateway address;
inserting a Site-Level Aggregation Identifier (SLA) contiguously following the IPv4 gateway address, wherein the SLA additionally forms a part of the address prefix for the IPv6 gateway; and
inserting the mobile node IPv4 address in the IPv6 tag address.

4. The method of claim 3, wherein the first generating step further includes:
inserting the prescribed UDP port for the IPv6 gateway contiguously following the SLA; and
inserting the prescribed UDP port for the IPv6 mobile node contiguously following the mobile node IPv4 address, the mobile node IPv4 address and the prescribed UDP port forming an address suffix for identifying the IPv6 mobile node, the IPv6 tag address being a routable IPv6 address.

5. The method of claim 4, wherein the IPv6 mobile node has a prescribed home agent having a corresponding home agent address, the second generating step including:
specifying the home agent address within a destination address field of the IPv6 packet; and
adding a binding update within the IPv6 packet for the prescribed home agent based on the IPv6 mobile node having attached to the IPv4 network, the IPv6 tag address being identifiable as a care-of address for the IPv6 mobile node.

6. The method of claim 1, wherein the first generating includes inserting within the IPv6 tag address the prescribed UDP port for the IPv6 gateway.

7. The method of claim 6, wherein the IPv4 gateway address is a public address stored in a gateway address field of the IPv6 tag address, the prescribed UDP port for the IPv6 gateway is a public port stored in a gateway port field of the IPv6 tag address, the mobile node IPv4 address is a private address stored in a mobile node address field of the IPv6 tag address, and the prescribed UDP port for the IPv6 mobile node is a private port stored in a mobile node port field of the IPv6 tag address, the method further including:
receiving from the IPv4 network a second IPv4 packet having a source address field specifying the IPv4 gateway address, a source port field specifying the prescribed UDP port for the IPv6 gateway, a destination address field specifying the mobile node IPv4 address, and a destination port field specifying the prescribed UDP port for the IPv6 mobile node;
unencapsulating a second IPv6 packet from the second IPv4 packet in response to detecting that the source port field specifies the prescribed UDP port for the IPv6 gateway;
detecting a second IPv6 tag address within a destination address field of the second IPv6 packet that specifies:
(1) a second IPv4 address, within the corresponding mobile node address field, that specifies a public IPv4 address distinct from the mobile node IPv4 address,
(2) a public UDP port within the corresponding mobile node port field and distinct from the prescribed UDP port for the IPv6 mobile node, and
(3) the protocol identifier, followed by the IPv4 gateway address within the corresponding gateway address field, at a beginning of the destination address field;
overwriting the second IPv4 address in the mobile node address field of the second IPv6 tag address with the mobile node IPv4 address;
overwriting the public UDP port in the mobile node port field of the second IPv6 tag address with the prescribed UDP port for the IPv6 mobile node; and
processing the second IPv6 packet based on a determined match between the modified second IPv6 tag address and the IPv6 tag address.

8. The method of claim 7, further including selectively source routing the second IPv6 packet in a second IPv6 network based on detecting a type 2 routing header specifying another destination, the outputting and receiving steps include outputting and receiving the respective IPv4 packet and the second IPv4 packet via a network address translator (NAT) having a port address translator (PAT).

9. The method of claim 6, wherein the IPv4 gateway address is a public address stored in a gateway address field of the IPv6 tag address, the prescribed UDP port for the IPv6 gateway is a public port stored in a gateway port field of the IPv6 tag address, the mobile node IPv4 address is a private address stored in a mobile node address field of the IPv6 tag address, and the prescribed UDP port for the IPv6 mobile node is a private port stored in a mobile node port field of the IPv6 tag address, the method further including:
receiving from the IPv4 network a second IPv4 packet having a source address field specifying the IPv4 gateway address, a source port field specifying the prescribed UDP port for the IPv6 gateway, a destination address field specifying the mobile node IPv4 address, and a destination port field specifying the prescribed UDP port for the IPv6 mobile node;
unencapsulating a second IPv6 packet from the second IPv4 packet in response to detecting that the source port field specifies the prescribed UDP port for the IPv6 gateway;
detecting a second IPv6 tag address within a destination address field of the second IPv6 packet that specifies:
(1) a second IPv4 address, within the corresponding mobile node address field, that specifies a public IPv4 address distinct from the mobile node IPv4 address,
(2) a public UDP port within the corresponding mobile node port field and distinct from the prescribed UDP port for the IPv6 mobile node,
(3) the protocol identifier, followed by a private IPv4 address within the corresponding gateway address field and distinct from the IPv4 gateway address, at a beginning of the destination address field, and
(4) a private UDP port within an IPv6 gateway port field and distinct from the prescribed port for the IPv6 gateway;
overwriting the second IPv4 address in the mobile node address field and the private IPv4 address in the gateway address field of the second IPv6 tag address with the mobile node IPv4 address and the IPv4 gateway address specified in a header of the second IPv4 packet, respectively;
overwriting the public UDP port in the mobile node port field and the private UDP port in the IPv6 gateway port field of the second IPv6 tag address with the prescribed UDP port for the IPv6 mobile node and the prescribed port for the IPv6 gateway specified in the header of the second IPv4 packet, respectively; and
processing the second IPv6 packet based on a determined match between the modified second IPv6 tag address and the IPv6 tag address.

10. A method in an IPv6 router (20b), the method including:
attaching to an IPv4 network (14) using an IPv4 gateway address and an IPv6 network (16) using an IPv6 address;
receiving from the IPv4 network (14) an IPv4 packet (90') having a destination address field (94) specifying the IPv4 gateway address (36), a destination port field (98) specifying a prescribed UDP gateway port (40), a source address field (92) specifying an IPv4 address (102) and a source port field (96) specifying a second UDP port (104);
recovering an IPv6 packet (70) from the IPv4 packet (90') in response to detecting the prescribed UDP gateway port (40) in the destination port field (98);
detecting within a source address field (74) of the IPv6 packet (70) an IPv6 tag address (30) comprising a preferably routable prefix for an IPv6 gateway (20b), the address prefix of the IPv6 tag address (30) including the IPv4 gateway address (36) for the IPv6 gateway (20b) and a protocol identifier (32) for identifying to the IPv6 gateway (20b) a protocol for transferring packets from the IPv4 network (14) to the IPv6 network (16) or from the IPv6 network (16) to the IPv4 network (14), the IPv6 tag address (30) further including a second IPv4 address (34) distinct from the IPv4 address (102).
modifying the IPv6 tag address (30) into a modified IPv6 tag address (30', 30"), in response to detecting the protocol identifier (32), by overwriting the second IPv4 address (34) with the IPv4 address (102) and inserting the second UDP port (104) into the IPv6 tag address; adverting, on the IPv6 network, the address prefix of the modified IPv6 tag address (30',30")
updating the IPv6 packet (70) into an updated IPv6 packet by inserting the modified IPv6 tag address (30', 30") into the source address field (74) of the IPv6 packet (70); and
outputting the updated IPv6 packet onto the IPv6 network (16).

11. The method of claim 10, wherein the protocol identifier and IPv4 gateway address for the IPv6 gateway form the address prefix for the IPv6 gateway.

12. The method of claim 11, wherein the modifying further includes:
detecting the protocol identifier at a start of the IPv6 tag address;
the inserting of the second UDP port overwriting a detected source UDP port value in the IPv6 tag address.

13. The method of claim 12, wherein the IPv6 router is configured for routing a second received IPv6 packet, received from the IPv6 network and having an IPv6 destination address field specifying the modified IPv6 address, onto the IPv4 network in response to detecting the protocol identifier in the IPv6 destination address field.

14. The method of claim 13, wherein the IPv6 tag address includes a private UDP source port, the second IPv4 address in the IPv6 tag address specifying a private IP address, the source address field and the source port field of the IPv4 packet having been translated to the respective IPv4 address and the second UDP port by a network address translator (NAT) having a port address translator (PAT).

15. The method of claim 14, further comprising:
receiving via the IPv6 network a second IPv6 packet having a routing header that specifies the modified IPv6 tag address;
detecting the protocol identifier, the IPv4 address and the second UDP port in the modified IPv6 tag address of the second IPv6 packet;
modifying the second IPv6 packet into a forwarded IPv6 packet by inserting the modified IPv6 tag address into the destination address field of the second IPv6 packet;
encapsulating the forwarded IPv6 packet in a second IPv4 packet having a destination address field specifying the IPv4 address and a port field specifying the second UDP port; and
outputting the second IPv4 packet onto the IPv4 network.

16. The method of claim 14, wherein the IPv4 gateway address is a private address and the prescribed UDP gateway port is a private port, the destination address field and the destination port field having been translated by a second NAT having a PAT, the modifying including overwriting a public IPv4 gateway address and a public UDP gateway port in the IPv6 tag address with the prescribed UDP gateway port and the IPv4 gateway address, respectively.

17. An IPv6 mobile node (20a) comprising:
means for first generating (56) an IPv6 tag address (30) comprising a globally routable address prefix for an IPv6 gateway (20b), the address prefix of the IPv6 tag address (30) including an IPv4 gateway address (36) for the IPv6 gateway (20b) and a protocol identifier (32) for identifying to the IPv6 gateway (20b) a protocol for transferring packets from an IPv4 network (14) to an IPv6 network (16) and from the IPv6 network (16) to the IPv4 network (14);
means for second generating (58) an IPv6 packet (70) having a source address field (74) that specifies the IPv6 tag address (30), and a header that specifies a home address assigned to the IPv6 mobile node;
means for encapsulating (54) the IPv6 packet (70) in an IPv4 packet (90) having an IPv4 header including a destination address field (94) that specifies the IPv4 gateway address (36), a source address field (92) specifying a mobile node IPv4 address (34) for the IPv6 mobile node (20a), and a transport header (95) having a source port field (96) specifying a prescribed UDP port (38) for the IPv6 mobile node (20a), and a destination port field (98) specifying a prescribed UDP port (40) for the IPv6 gateway (20b) used for identifying transfer of the IPv6 packet (70) between the IPv4 network (14) and the IPv6 network (16); and
means for outputting (64) the IPv4 packet (90) to the IPv6 gateway (20b) via the IPv4 network (14), for transfer of the IPv6 packet (70) onto the IPv6 network (16).

18. The IPv6 mobile node of claim 17, wherein the protocol identifier and IPv4 gateway address form the address prefix for the IPv6 gateway.

19. The IPv6 mobile node of claim 18, wherein the first generating means is configured for:
specifying the protocol identifier at a beginning of the IPv6 tag address, contiguously followed by the IPv4 gateway address;
inserting a Site-Level Aggregation Identifier (SLA) contiguously following the IPv4 gateway address, wherein the SLA additionally forms a part of the address prefix for the IPv6 gateway; and
inserting the mobile node IPv4 address in the IPv6 tag address.

20. The IPv6 mobile node of claim 19, wherein the first generating means is configured for:
inserting the prescribed UDP port for the IPv6 gateway contiguously following the SLA; and
inserting the prescribed UDP port for the IPv6 mobile node contiguously following the mobile node IPv4 address, the mobile node IPv4 address and the prescribed UDP port forming an address suffix for identifying the IPv6 mobile node, the IPv6 tag address being a routable IPv6 address.

21. The IPv6 mobile node of claim 20, wherein the IPv6 mobile node has a prescribed home agent having a corresponding home agent address, the second generating means configured for specifying the home agent address within a destination address field of the IPv6 packet, and adding a binding update within the IPv6 packet for the prescribed home agent based on the IPv6 mobile node having attached to the IPv4 network, the IPv6 tag address being identifiable as a care-of address for the IPv6 mobile node.

22. The IPv6 mobile node of claim 21, wherein the first generating means is configured for inserting within the IPv6 tag address the prescribed UDP port for the IPv6 gateway.

23. The IPv6 mobile node of claim 22, wherein the IPv4 gateway address is a public address stored in a gateway address field of the IPv6 tag address, the prescribed UDP port for the IPv6 gateway is a public port stored in a gateway port field of the IPv6 tag address, the mobile node IPv4 address is a private address stored in a mobile node address field of the IPv6 tag address, and the prescribed UDP port for the IPv6 mobile node is a private port stored in a mobile node port field of the IPv6 tag address, wherein:
the means for outputting is configured for receiving from the IPv4 network a second IPv4 packet having a source address field specifying the IPv4 gateway address, a source port field specifying the prescribed UDP port for the IPv6 gateway, a destination address field specifying the mobile node IPv4 address, and a destination port field specifying the prescribed UDP port for the IPv6 mobile node;
the encapsulating means is configured for unencapsulating a second IPv6 packet from the second IPv4 packet in response to detecting that the source port field specifies the prescribed UDP port for the IPv6 gateway;
the encapsulating means configured for detecting a second IPv6 tag address within a destination address field of the second IPv6 packet that specifies:
(1) a second IPv4 address, within the corresponding mobile node address field, that specifies a public IPv4 address distinct from the mobile node IPv4 address,
(2) a public UDP port within the corresponding mobile node port field and distinct from the prescribed UDP port for the IPv6 mobile node, and
(3) the protocol identifier, followed by the IPv4 gateway address within the corresponding gateway address field, at a beginning of the destination address field;
the encapsulating means configured for overwriting the second IPv4 address in the mobile node address field of the second IPv6 tag address with the mobile node IPv4 address;
the encapsulating means configured for overwriting the public UDP port in the mobile node port field of the second IPv6 tag address with the prescribed UDP port for the IPv6 mobile node; and
the second generating means configured for processing the second IPv6 packet based on a determined match between the modified second IPv6 tag address and the IPv6 tag address.

24. The IPv6 mobile node of claim 23, wherein:
the second generating means is configured for selectively source routing the second IPv6 packet in a second IPv6 network based on detecting a type 2 routing header specifying another destination; and
the outputting means is configured for outputting and receiving the respective IPv4 packet and the second IPv4 packet via a network address translator (NAT) having a port address translator (PAT).

25. The IPv6 mobile node of claim 22, wherein the IPv4 gateway address is a public address stored in a gateway address field of the IPv6 tag address, the prescribed UDP port for the IPv6 gateway is a public port stored in a gateway port field of the IPv6 tag address, the mobile node IPv4 address is a private address stored in a mobile node address field of the IPv6 tag address, and the prescribed UDP port for the IPv6 mobile node is a private port stored in a mobile node port field of the IPv6 tag address, wherein:
the means for outputting is configured for receiving from the IPv4 network a second IPv4 packet having a source address field specifying the IPv4 gateway address, a source port field specifying the prescribed UDP port for the IPv6 gateway, a destination address field specifying the mobile node IPv4 address, and a destination port field specifying the prescribed UDP port for the IPv6 mobile node;
the encapsulating means configured for unencapsulating a second IPv6 packet from the second IPv4 packet in response to detecting that the source port field specifies the prescribed UDP port for the IPv6 gateway;
the encapsulating means configured for detecting a second IPv6 tag address within a destination address field of the second IPv6 packet that specifies:
(1) a second IPv4 address, within the corresponding mobile node address field, that specifies a public IPv4 address distinct from the mobile node IPv4 address,
(2) a public UDP port within the corresponding mobile node port field and distinct from the prescribed UDP port for the IPv6 mobile node,
(3) the protocol identifier, followed by a private IPv4 address within the corresponding gateway address field and distinct from the IPv4 gateway address, at a beginning of the destination address field, and
(4) a private UDP port within an IPv6 gateway port field and distinct from the prescribed port for the IPv6 gateway;
the encapsulating means configured for overwriting the second IPv4 address in the mobile node address field and the private IPv4 address in the gateway address field of the second IPv6 tag address with the mobile node IPv4 address and the IPv4 gateway address specified in a header of the second IPv4 packet, respectively;
the encapsulating means configured for overwriting the public UDP port in the mobile node port field and the private UDP port in the IPv6 gateway port field of the second IPv6 tag address with the prescribed UDP port for the IPv6 mobile node and the prescribed port for the IPv6 gateway specified in the header of the second IPv4 packet, respectively; and
the second generating means configured for processing the second IPv6 packet based on a determined match between the modified second IPv6 tag address and the IPv6 tag address.

26. An IPv6 router (20b) including:
means for attaching to an IPv4 network (14) using an IPv4 gateway address and an IPv6 network (16) using an IPv6 address;
means for receiving from the IPv4 network (14) an IPv4 packet (90') having a destination address field (94) specifying the IPv4 gateway address (36), a destination port field (98) specifying a prescribed UDP gateway port (40), a source address field (92) specifying an IPv4 address (102) and a source port field (94) specifying a second UDP port (104);
means for recovering an IPv6 packet (70) from the IPv4 packet (90') in response to detecting the prescribed UDP gateway port (40) in the destination port field (98);
means for detecting within a source address field (74) of the IPv6 packet an IPv6 tag address (30) comprising a globally routable address prefix for an IPv6 gateway (20b), the address prefix of the IPv6 tag address (30) including an IPv4 gateway address (36) for the IPv6 gateway (20b) and a protocol identifier (32) for identifying to the IPv6 gateway (20b) a protocol for transferring packets from the IPv4 network (14) to the IPv6 network (16) or from the IPv6 network (16) to the IPv4 network (14), the IPv6 tag address (30) further including a second IPv4 address (34) distinct from the IPv4 address (102);
means for modifying the IPv6 tag address (30) into a modified IPv6 tag address (30', 30"), in response to detecting the protocol identifier (32), by overwriting the second IPv4 address (34) with the IPv4 address (102) and inserting the second UDP port (104) into the IPv6 tag address (30); means for adverting, on the IPv6 network, the address prefix of the modified IPv6 tag address (30',30")
means for updating the IPv6 packet (70) into an updated IPv6 packet by inserting the modified IPv6 tag address (30', 30") into the source address field (74) of the IPv6 packet (70); and
means for outputting the updated IPv6 packet onto the IPv6 network (16).

27. The IPv6 router of claim 26, wherein the protocol identifier and an IPv4 gateway address for the IPv6 gateway form the address prefix for the IPv6 gateway

28. The IPv6 router of claim 27, wherein the modifying means is configured for:
detecting the protocol identifier at a start of the IPv6 tag address;
inserting the second UDP port by overwriting a detected source UDP port value in the IPv6 tag address.

29. The IPv6 router of claim 28, wherein the IPv6 router is configured for routing a second received IPv6 packet, received from the IPv6 network and having an IPv6 destination address field specifying the modified IPv6 address, onto the IPv4 network in response to detecting the protocol identifier in the IPv6 destination address field.

30. The IPv6 router of claim 29, wherein the IPv6 tag address includes a private UDP source port, the second IPv4 address in the IPv6 tag address specifying a private IP address, the source address field and the source port field of the IPv4 packet having been translated to the respective IPv4 address and the second UDP port by a network address translator (NAT) having a port address translator (PAT).

31. The IPv6 router of claim 30, wherein:
the outputting means is configured for receiving via the IPv6 network a second IPv6 packet having a routing header that specifies the modified IPv6 tag address;
the detecting means is configured for detecting the protocol identifier, the IPv4 address and the second UDP port in the modified IPv6 tag address of the second IPv6 packet;
the modifying means is configured for modifying the second IPv6 packet into a forwarded IPv6 packet by inserting the modified IPv6 tag address into the destination address field of the second IPv6 packet;
the recovering means is configured for encapsulating the forwarded IPv6 packet in a second IPv4 packet having a destination address field specifying the IPv4 address and a port field specifying the second UDP port; and
the receiving means is configured for outputting the second IPv4 packet onto the IPv4 network.

32. The IPv6 router of claim 30, wherein the IPv4 gateway address is a private address and the prescribed UDP gateway port is a private port, the destination address field and the destination port field having been translated by a second NAT having a PAT, the modifying means configured for overwriting a public IPv4 gateway address and a public UDP gateway port in the IPv6 tag address with the prescribed UDP gateway port and the IPv4 gateway address, respectively.

33. A computer program or computer program product or computer readable medium comprising instructions for performing a method according to any of claims 1 to 16.

## Patentansprüche

1. Verfahren in einem mobilen IPv6 Knoten (20a), wobei das Verfahren umfasst:
zunächst Erzeugen einer IPv6 Tag-Adresse (30) mit einem global routingfähigen Adresspräfix für ein IPv6 Gateway (206), wobei das Adresspräfix der IPv6 Tag-Adresse (30) eine IPv4 Gateway-Adresse (36) für das IPv6 Gateway (20b) und einen Protokollidentifizierer (32) zum Identifizieren eines Protokolls für das IPv6 Gateway (20b) zum Übertragen von Paketen von einem IPv4 Netzwerk (14) an ein IPv6 Netzwerk (106) oder von dem IPv6 Netzwerk (16) an das IPv4 Netzwerk (14) aufweist;
dann Erzeugen eines IPv6 Pakets (70) mit einem Quellenadressfeld (74), das die IPv6 Tag-Adresse (30) spezifiziert, und einem Header, der eine Home-Adresse spezifiziert, die dem mobilen IPv6 Knoten zugeordnet ist;
Verkapseln des IPv6 Pakets (70) in ein IPv4 Paket (90), das einen IPv4 Header hat, der ein Zieladressfeld (94) aufweist, das die IPv4 Gateway-Adresse (36) spezifiziert, ein Quellenadressfeld (92), das eine IPv4 Adresse (34) des mobilen Knotens für den mobilen IPv6 Knoten (20a) spezifiziert, und einen Transportheader (95), der ein Quellenportfeld (96) hat, das einen vorgeschriebenen UDP-Port (38) für den mobilen IPv6 Knoten (20a) spezifiziert, und ein Zielportfeld (98), das einen vorgeschriebenen UDP-Port (40) für das IPv6 Gateway (20b) spezifiziert, und zum Identifizieren von Transfer des IPv6 Pakets (70) zwischen dem IPv4 Netzwerk (14) und dem IPv6 Netzwerk (16) verwendet wird; und
Ausgeben des IPv4 Pakets (90) an das IPv6 Gateway (20b) über das IPv4 Netzwerk (14) zum Transfer des IPv6 Pakets (70) auf das IPv6 Netzwerk (16).

2. Verfahren nach Anspruch 1, wobei der Protokollidentifizierer und die IPv4 Gateway-Adresse das Adresspräfix für das IPv6 Gateway bilden.

3. Verfahren nach Anspruch 2, wobei der erste Erzeugungsschritt umfasst:
Spezifizieren des Protokollidentifizierers am Anfang der IPv6 Tag-Adresse, angrenzend gefolgt von der IPv4 Gateway-Adresse;
Einfügen eines Site-Level Aggregation Identifizierers (SLA),
angrenzend auf die IPv4 Gateway-Adresse folgend, wobei der SLA zusätzlich einen Teil des Adresspräfixes für das IPv6 Gateway bildet; und
Einfügen der IPv4 Adresse des mobile Knotens in die IPv6 Tag-Adresse.

4. Verfahren nach Anspruch 3, wobei der erste Erzeugungsschritt des Weiteren umfasst:
Einfügen des vorgeschriebenen UDP-Ports für das IPv6 Gateway angrenzend auf den SLA folgend; und
Einfügen des vorgeschriebenen UDP-Ports für den mobilen IPv6 Knoten angrenzend auf die IPv4 Adresse des mobilen Knotens folgend, wobei die IPv4 Adresse des mobilen Knotens und der vorgeschriebene UDP-Port ein Adresssuffix zum Identifizieren des mobilen IPv6 Knotens bilden, wobei die IPv6 Tag-Adresse eine routingfähige IPv6 Adresse ist.

5. Verfahren nach Anspruch 4, wobei der mobile IPv6 Knoten einen vorgeschriebenen Home Agent mit einer entsprechenden Home Agent Adresse hat, wobei zweite Erzeugungsschritt umfasst:
Spezifizieren der Home Agent Adresse in einem Zieladressfeld des IPv6 Pakets; und
Hinzufügen eines Binding Update in dem IPv6 Paket für den vorgeschriebenen Home Agent basierend darauf, dass sich der mobile IPv6 Knoten an das IPv4 Netzwerk angehängt hat, wobei die IPv6 Tag-Adresse als Care-of-Adresse für den mobilen IPv6 Knoten identifizierbar ist.

6. Verfahren nach Anspruch 1, wobei das erste Erzeugen das Einfügen des vorgeschriebenen UDP-Ports für das IPv6 Gateway in die IPv6 Tag-Adresse umfasst.

7. Verfahren nach Anspruch 6, wobei die IPv4 Gateway-Adresse eine öffentliche Adresse ist, die in einem Gateway-Adressfeld der IPv6 Tag-Adresse gespeichert ist, der vorgeschriebene UDP-Port für das IPv6 Gateway ein öffentlicher Port ist, der in einem Gateway-Portfeld der IPv6 Tag-Adresse gespeichert ist, die IPv4 Adresse des mobilen Knotens eine private Adresse ist, die in einem Adressfeld der IPv6 Tag-Adresse des mobilen Knotens gespeichert ist, und der vorgeschriebene UDP-Port für den mobilen IPv6 Knoten ein privater Port ist, der in einem Portfeld der IPv6 Tag-Adresse des mobilen Knotens gespeichert ist, wobei das Verfahren des Weiteren umfasst:
Empfangen, von dem IPv4 Netzwerk, eines zweiten IPv4 Pakets, das ein Quellenadressfeld hat, das die IPv4 Gateway-Adresse spezifiziert,
ein Quellenportfeld, das den vorgeschriebenen UDP-Port für das IPv6 Gateway spezifiziert, ein Zieladressfeld, das die IPv4 Adresse des mobilen Knotens spezifiziert, und ein Zielportfeld, das den vorgeschriebenen UDP-Port für den mobilen IPv6-Knoten spezifiziert;
Entkapseln eines zweiten IPv6 Pakets aus dem zweiten IPv4 Paket im Ansprechen auf das Ermitteln, dass das Quellenportfeld den vorgeschriebenen UDP-Port für das IPv6 Gateway spezifiziert;
Ermitteln einer zweiten IPv6 Tag-Adresse in einem Zieladressfeld des zweiten IPv6 Pakets, das spezifiziert:
(1) eine zweite IPv4 Adresse in dem entsprechenden Adressfeld des mobilen Knotens, die eine öffentliche IPv4 Adresse spezifiziert, die sich von der IPv4 Adresse des mobilen Knotens unterscheidet;
(2) einen öffentlichen UDP-Port in dem entsprechenden Portfeld des mobilen Knotens, der sich von dem vorgeschriebenen UDP-Port für den mobilen IPv6 Knoten unterscheidet; und
(3) den Protokollidentifizierer, gefolgt von der IPv4 Gateway-Adresse in dem entsprechenden Gateway-Adressfeld, zu Beginn des Zieladressfelds;
Überschreiben der zweiten IPv4 Adresse in dem Adressfeld der zweiten IPv6 Tag-Adresse des mobilen Knotens mit der IPv4 Adresse des mobilen Knotens;
Überschreiben des öffentlichen UDP-Ports in dem Portfeld der zweiten IPv6 Tag-Adresse des mobilen Knotens mit dem vorgeschriebenen UDP-Port für den mobilen IPv6 Knoten; und Verarbeiten des zweiten IPv6 Pakets basierend auf einer ermittelten Übereinstimmung zwischen der modifizierten zweiten IPv6 Tag-Adresse und der IPv6 Tag-Adresse.

8. Verfahren nach Anspruch 7, das des Weiteren das selektive Quellenrouten des zweiten IPv6 Pakets in einem zweiten IPv6 Netzwerk basierend auf dem Ermitteln eines Routingheaders des Typs 2, der ein anderes Ziel spezifiziert, umfasst, wobei die Schritte des Ausgebens und des Empfangens das Ausgeben und Empfangen des entsprechenden IPv4 Pakets und des zweiten IPv4 Pakets über einen Network Address Translator (NAT) umfasst, der einen Port Address Translator (PAT) hat.

9. Verfahren nach Anspruch 6, wobei die IPv4 Gateway-Adresse eine öffentliche Adresse ist, die in einem Gateway-Adressfeld der IPv6 Tag-Adresse gespeichert ist, der vorgeschriebene UDP-Port für das IPv6 Gateway ein öffentlicher Port ist, der in einem Gateway-Portfeld der IPv6 Tag-Adresse gespeichert ist, die IPv4 Adresse des mobilen Knotens eine private Adresse ist, die in einem Adressfeld der IPv6 Tag-Adresse des mobilen Knotens gespeichert ist, und der vorgeschriebene UDP-Port für den mobilen IPv6 Knoten ein privater Port ist, der in einem Portfeld der IPv6 Tag-Adresse des mobilen Knotens gespeichert ist, wobei das Verfahren des Weiteren umfasst:
Empfangen, von dem IPv4 Netzwerk, eines zweiten IPv4 Pakets, das ein Quellenadressfeld hat, das die IPv4 Gateway-Adresse spezifiziert,
ein Quellenportfeld, das den vorgeschriebenen UDP-Port für das IPv6 Gateway spezifiziert, ein Zieladressfeld, das die IPv4 Adresse des mobilen Knotens spezifiziert, und ein Zielportfeld, das den vorgeschriebenen UDP-Port für den mobilen IPv6-Knoten spezifiziert;
Entkapseln eines zweiten IPv6 Pakets aus dem zweiten IPv4 Paket im Ansprechen auf das Ermitteln, dass das Quellenportfeld den vorgeschriebenen UDP-Port für das IPv6 Gateway spezifiziert;
Ermitteln einer zweiten IPv6 Tag-Adresse in einem Zieladressfeld des zweiten IPv6 Pakets, das spezifiziert:
(1) eine zweite IPv4 Adresse in dem entsprechenden Adressfeld des mobilen Knotens, die eine öffentliche IPv4 Adresse spezifiziert, die sich von der IPv4 Adresse des mobilen Knotens unterscheidet;
(2) einen öffentlichen UDP-Port in dem entsprechenden Portfeld des mobilen Knotens, der sich von dem vorgeschriebenen UDP-Port für den mobilen IPv6 Knoten unterscheidet;
(3) den Protokollidentifizierer, gefolgt von einer privaten IPv4 Adresse in dem entsprechenden Gateway-Adressfeld und verschieden von der IPv4 Gateway-Adresse, zu Beginn des Zieladressfelds; und
(4) einen privaten UDP-Port in einem IPv6 Gateway-Portfeld, der sich von dem vorgeschriebenen Port für das IPv6 Gateway unterscheidet;
Überschreiben der zweiten IPv4 Adresse in dem Adressfeld des mobilen Knotens und der privaten IPv4 Adresse in dem Gateway-Adressfeld der zweiten IPv6 Tag-Adresse mit der IPv4 Adresse des mobilen Knotens bzw. der in einem Header des zweiten IPv4 Pakets gespeicherten IPv4 Gateway-Adresse;
Überschreiben des öffentlichen UDP-Ports in dem Portfeld des mobilen Knotens und des privaten UDP-Ports in dem IPv6 Gateway-Portfeld der zweiten IPv6 Tag-Adresse mit dem vorgeschriebenen UDP-Port für den mobilen IPv6 Knoten bzw. dem vorgeschriebenen Port für das IPv6 Gateway, der in dem Header des zweiten IPv4 Pakets spezifiziert ist; und
Verarbeiten des zweiten IPv6 Pakets basierend auf einer ermittelten Übereinstimmung zwischen der modifizierten zweiten IPv6 Tag-Adresse und der IPv6 Tag-Adresse.

10. Verfahren in einem IPv6 Router (20b), wobei das Verfahren umfasst:
Anhängen an ein IPv4 Netzwerk (14) unter Verwendung einer IPv4 Gateway-Adresse und ein IPv6 Netzwerk (16) unter Verwendung einer IPv6 Adresse;
Empfangen, von dem IPv4 Netzwerk, eines IPv4 Pakets (90'), das ein Zieladressfeld (94) hat, das die IPv4 Gateway-Adresse (36) spezifiziert, ein Zielportfeld (98), das einen vorgeschriebenen UDP-Gateway-Port (40) spezifiziert, ein Quellenadressfeld (92), das eine IPv4 Adresse (102) spezifiziert, und ein Quellenportfeld (96), das einen zweiten UDP-Port spezifiziert;
Wiederherstellen eines IPv6 Pakets (70) aus dem IPv4 Paket (90') im Ansprechen auf das Ermitteln des vorgeschriebenen UDP-Gateway-Ports (40) in dem Zielportfeld (98);
Ermitteln, in einem Quellenadressfeld (74) des IPv6 Pakets (70), einer IPv6 Tag-Adresse (30) mit einem global routingfähigen Adresspräfix für ein IPv6 Gateway (20b), wobei das Adresspräfix der IPv6 Tag-Adresse (30) die IPv4 Gateway-Adresse (36) für das IPv6 Gateway (20b) und einen Protokollidentifizierer (32) zum Identifizieren eines Protokolls für das IPv6 Gateway (20b) zum Übertragen von Paketen von dem IPv4 Netzwerk (14) an das IPv6 Netzwerk (106) oder von dem IPv6 Netzwerk (16) an das IPv4 Netzwerk (14) aufweist, wobei die IPv6 Tag-Adresse (30) des Weiteren eine zweite IPv4 Adresse (34) aufweist, die sich von der IPv4 Adresse (102) unterscheidet;
Modifizieren der IPv6 Tag-Adresse (30) in eine modifizierte IPv6 Tag-Adresse (30', 30") im Ansprechen auf das Ermitteln des Protokollidentifizierers (32) durch Überschreiben der zweiten IPv4 Adresse (34) mit der IPv4 Adresse (102) und Einfügen des zweiten UDP-Ports (104) in die IPv6 Tag-Adresse;
Ankündigen, auf dem IPv6 Netzwerk, des Adresspräfixes der modifizierten IPv6 Tag-Adresse (30', 30");
Aktualisieren des IPv6 Pakets (70) in ein aktualisiertes IPv6 Paket durch Einfügen der modifizierten IPv6 Tag-Adresse (30', 30") in das Quellenadressfeld (74) des IPv6 Pakets (70); und
Ausgeben des aktualisierten IPv6 Pakets auf das IPv6 Netzwerk (16).

11. Verfahren nach Anspruch 10, wobei der Protokollidentifizierer und die IPv4 Gateway-Adresse für das IPv6 Gateway das Adresspräfix für das IPv6 Gateway bilden.

12. Verfahren nach Anspruch 11, wobei das Modifizieren des Weiteren umfasst:
Ermitteln des Protokollidentifizierers am Beginn der IPv6 Tag-Adresse;
wobei das Einfügen des zweiten UDP-Ports einen ermittelten Quellen-UDP-Port-Wert in der IPv6 Tag-Adresse überschreibt.

13. Verfahren nach Anspruch 12, wobei der IPv6 Router dazu konfiguriert ist, ein zweites empfangenes IPv6 Paket, das von dem IPv6 Netzwerk empfangen wurde und ein IPv6 Zieladressfeld hat, das die modifizierte IPv6 Adresse spezifiziert, auf das IPv4 Netzwerk zu routen, im Ansprechen auf das Ermitteln des Protokollidentifizierers in dem IPv6 Zieladressfeld.

14. Verfahren nach Anspruch 13, wobei die IPv6 Tag-Adresse einen privaten UDP-Quellen-Port aufweist, wobei die zweite IPv4 Adresse in der IPv6 Tag-Adresse eine private IP-Adresse spezifiziert, wobei das Quellenadressfeld und das Quellenportfeld des IPv4 Pakets in die jeweilige IPv4 Adresse und den zweiten UDP-Port durch einen Network Address Translator (NAT) mit einem Port Address Translator (PAT) übertragen worden sind.

15. Verfahren nach Anspruch 14, das des Weiteren umfasst:
Empfangen eines zweiten IPv6 Pakets, das einen Routingheader hat,
der die modifizierte IPv6 Tag-Adresse spezifiziert, über das IPv6 Netzwerk;
Ermitteln des Protokollidentifizierers, der IPv4 Adresse und des zweiten UDP-Ports in der modifizierten IPv6 Tag-Adresse des zweiten IPv6 Pakets;
Modifizieren des zweiten IPv6 Pakets in ein weitergeleitetes IPv6 Paket durch Einfügen der modifizierten IPv6 Tag-Adresse in das Zieladressfeld des zweiten IPv6 Pakets;
Verkapseln des weitergeleiteten IPv6-Pakets in ein zweites IPv4 Paket, das ein Zieladressfeld hat, das die IPv4 Adresse spezifiziert,
und ein Portfeld, das den zweiten UDP-Port spezifiziert; und
Ausgeben des zweiten IPv4 Pakets auf das IPv4 Netzwerk.

16. Verfahren nach Anspruch 14, wobei die IPv4 Gateway-Adresse eine private Adresse und der vorgeschriebene UDP Gateway-Port ein privater Port ist, das Zieladressfeld und das Zielportfeld von einem zweiten NAT mit einem PAT übertragen worden sind, das Modifizieren das Überschreiben einer öffentlichen IPv4 Gateway-Adresse und eines öffentlichen UDP Gateway-Ports in der IPv6 Tag-Adresse mit dem vorgeschriebenen UDP Gateway-Port bzw. der IPv4 Gateway-Adresse umfasst.

17. Mobiler IPv6 Knoten (20a) mit:
einer Einrichtung, um zunächst eine IPv6 Tag-Adresse (30) mit einem global routingfähigen Adresspräfix für ein IPv6 Gateway (206) zu erzeugen (56), wobei das Adresspräfix der IPv6 Tag-Adresse (30) eine IPv4 Gateway-Adresse (36) für das IPv6 Gateway (20b) und
einen Protokollidentifizierer (32) zum Identifizieren eines Protokolls für das IPv6 Gateway (20b) zum Übertragen von Paketen von einem IPv4 Netzwerk (14) an ein IPv6 Netzwerk (106) und von dem IPv6 Netzwerk (16) an das IPv4 Netzwerk (14) aufweist;
einer Einrichtung, um dann ein IPv6 Paket (70) mit einem Quellenadressfeld (74), das die IPv6 Tag-Adresse (30) spezifiziert,
und einem Header, der eine Home-Adresse spezifiziert, die dem mobilen IPv6 Knoten zugeordnet ist, zu erzeugen (58);
einer Einrichtung zum Verkapseln (54) des IPv6 Pakets (70) in ein IPv4 Paket (90), das einen IPv4 Header hat, der ein Zieladressfeld (94) aufweist, das die IPv4 Gateway-Adresse (36) spezifiziert, ein Quellenadressfeld (92), das eine IPv4 Adresse (34) des mobilen Knotens für den mobilen IPv6 Knoten (20a) spezifiziert, und einen Transportheader (95), der ein Quellenportfeld (96) hat, das einen vorgeschriebenen UDP-Port (38) für den mobilen IPv6 Knoten (20a) spezifiziert, und ein Zielportfeld (98), das einen vorgeschriebenen UDP-Port (40) für das IPv6 Gateway (20b) spezifiziert und zum Identifizieren von Transfer des IPv6 Pakets (70) zwischen dem IPv4 Netzwerk (14) und dem IPv6 Netzwerk (16) verwendet wird; und
einer Einrichtung zum Ausgeben (64) des IPv4 Pakets (90) an das IPv6 Gateway (20b) über das IPv4 Netzwerk (14) zum Transfer des IPv6 Pakets (70) auf das IPv6 Netzwerk (16).

18. Mobiler IPv6 Knoten nach Anspruch 17, wobei der Protokollidentifizierer und die IPv4 Gateway-Adresse das Adresspräfix für das IPv6 Gateway bilden.

19. Mobiler IPv6 Knoten nach Anspruch 18, wobei die erste Erzeugungseinrichtung konfiguriert ist zum:
Spezifizieren des Protokollidentifizierers am Anfang der IPv6 Tag-Adresse, angrenzend gefolgt von der IPv4 Gateway-Adresse;
Einfügen eines Site-Level Aggregation Identifizierers (SLA), auf den angrenzend auf die IPv4 Gateway-Adresse folgend, wobei der SLA zusätzlich einen Teil des Adresspräfixes für das IPv6 Gateway bildet; und
Einfügen der IPv4 Adresse des mobilen Knotens in die IPv6 Tag-Adresse.

20. Mobiler IPv6 Knoten nach Anspruch 19, wobei die erste Erzeugungseinrichtung konfiguriert ist zum:
Einfügen des vorgeschriebenen UDP-Ports für das IPv6 Gateway angrenzend auf den SLA folgend; und
Einfügen des vorgeschriebenen UDP-Ports für den mobilen IPv6 Knoten angrenzend auf die IPv4 Adresse des mobilen Knotens folgend, wobei die IPv4 Adresse des mobilen Knotens und der vorgeschriebene UDP-Port ein Adresssuffix zum Identifizieren des mobilen IPv6 Knotens bilden, wobei die IPv6 Tag-Adresse eine routingfähige IPv6 Adresse ist.

21. Mobiler IPv6 Knoten nach Anspruch 20, wobei der mobile IPv6 Knoten einen vorgeschriebenen Home Agent mit einer entsprechenden Home Agent Adresse hat, wobei die zweite Erzeugungseinrichtung konfiguriert ist zum Spezifizieren der Home Agent Adresse in einem Zieladressfeld des IPv6 Pakets; und zum Hinzufügen eines Binding Update in dem IPv6 Paket für den vorgeschriebenen Home Agent basierend darauf, dass sich der mobile IPv6 Knoten an das IPv4 Netzwerk angehängt hat, wobei die IPv6 Tag-Adresse als Care-of-Adresse für den mobilen IPv6 Knoten identifizierbar ist.

22. Mobiler IPv6 Knoten nach Anspruch 21, wobei die erste Erzeugungseinrichtung konfiguriert ist zum Einfügen des vorgeschriebenen UDP-Ports für das IPv6 Gateway in die IPv6 Tag-Adresse.

23. Mobiler IPv6 Knoten nach Anspruch 22, wobei die IPv4 Gateway-Adresse eine öffentliche Adresse ist, die in einem Gateway-Adressfeld der IPv6 Tag-Adresse gespeichert ist, der vorgeschriebene UDP-Port für das IPv6 Gateway ein öffentlicher Port ist, der in einem Gateway-Portfeld der IPv6 Tag-Adresse gespeichert ist, die IPv4 Adresse des mobilen Knotens eine private Adresse ist, die in einem Adressfeld der IPv6 Tag-Adresse des mobilen Knotens gespeichert ist, und der vorgeschriebene UDP-Port für den mobilen IPv6 Knoten ein privater Port ist, der in einem Portfeld der IPv6 Tag-Adresse des mobilen Knotens gespeichert ist, wobei:
die Einrichtung zum Ausgeben konfiguriert ist zum Empfangen, von dem IPv4 Netzwerk, eines zweiten IPv4 Pakets, das ein Quellenadressfeld hat, das die IPv4 Gateway-Adresse spezifiziert, ein Quellenportfeld, das den vorgeschriebenen UDP-Port für das IPv6 Gateway spezifiziert, ein Zieladressfeld, das die IPv4 Adresse des mobilen Knotens spezifiziert, und ein Zielportfeld, das den vorgeschriebenen UDP-Port für den mobilen IPv6-Knoten spezifiziert;
die Einrichtung zum Verkapseln konfiguriert ist zum Entkapseln eines zweiten IPv6 Pakets aus dem zweiten IPv4 Paket im Ansprechen auf das Ermitteln, dass das Quellenportfeld den vorgeschriebenen UDP-Port für das IPv6 Gateway spezifiziert;
die Einrichtung zum Verkapseln konfiguriert ist zum Ermitteln einer zweiten IPv6 Tag-Adresse in einem Zieladressfeld des zweiten IPv6 Pakets, das spezifiziert:
(1) eine zweite IPv4 Adresse in dem entsprechenden Adressfeld des mobilen Knotens, die eine öffentliche IPv4 Adresse spezifiziert, die sich von der IPv4 Adresse des mobilen Knotens unterscheidet;
(2) einen öffentlichen UDP-Port in dem entsprechenden Portfeld des mobilen Knotens, der sich von dem vorgeschriebenen UDP-Port für den mobilen IPv6 Knoten unterscheidet; und
(3) den Protokollidentifizierer, gefolgt von der IPv4 Gateway-Adresse in dem entsprechenden Gateway-Adressfeld, zu Beginn des Zieladressfelds;
die Einrichtung zum Verkapseln konfiguriert ist zum Überschreiben der zweiten IPv4 Adresse in dem Adressfeld der zweiten IPv6 Tag-Adresse des mobilen Knotens mit der IPv4 Adresse des mobilen Knotens;
die Einrichtung zum Verkapseln konfiguriert ist zum Überschreiben des öffentlichen UDP-Ports in dem Portfeld der zweiten IPv6 Tag-Adresse des mobilen Knotens mit dem vorgeschriebenen UDP-Port für den mobilen IPv6 Knoten; und
die zweite Erzeugungseinrichtung konfiguriert ist zum Verarbeiten des zweiten IPv6 Pakets basierend auf einer ermittelten Übereinstimmung zwischen der modifizierten zweiten IPv6 Tag-Adresse und der IPv6 Tag-Adresse.

24. Mobiler IPv6 Knoten nach Anspruch 23, wobei:
die zweite Erzeugungseinrichtung konfiguriert ist zum selektiven Quellenrouten des zweiten IPv6 Pakets in einem zweiten IPv6 Netzwerk basierend auf dem Ermitteln eines Routingheaders des Typs 2, der ein anderes Ziel spezifiziert; und
die Einrichtung zum Ausgeben konfiguriert ist zum Ausgeben und Empfangen des entsprechenden IPv4 Pakets und des zweiten IPv4 Pakets über einen Network Address Translator (NAT), der einen Port Address Translator (PAT) hat.

25. Mobiler IPv6 Knoten nach Anspruch 22, wobei die IPv4 Gateway-Adresse eine öffentliche Adresse ist, die in einem Gateway-Adressfeld der IPv6 Tag-Adresse gespeichert ist, der vorgeschriebene UDP-Port für das IPv6 Gateway ein öffentlicher Port ist, der in einem Gateway-Portfeld der IPv6 Tag-Adresse gespeichert ist, die IPv4 Adresse des mobilen Knotens eine private Adresse ist, die in einem Adressfeld der IPv6 Tag-Adresse des mobilen Knotens gespeichert ist, und der vorgeschriebene UDP-Port für den mobilen IPv6 Knoten ein privater Port ist, der in einem Portfeld der IPv6 Tag-Adresse des mobilen Knotens gespeichert ist, wobei:
die Einrichtung zum Ausgeben konfiguriert ist zum Empfangen, von dem IPv4 Netzwerk, eines zweiten IPv4 Pakets, das ein Quellenadressfeld hat, das die IPv4 Gateway-Adresse spezifiziert, ein Quellenportfelds, das den vorgeschriebenen UDP-Port für das IPv6 Gateway spezifiziert, ein Zieladressfeld, das die IPv4 Adresse des mobilen Knotens spezifiziert, und ein Zielportfeld, das den vorgeschriebenen UDP-Port für den mobilen IPv6-Knoten spezifiziert;
die Einrichtung zum Verkapseln konfiguriert ist zum Entkapseln eines zweiten IPv6 Pakets aus dem zweiten IPv4 Paket im Ansprechen auf das Ermitteln, dass das Quellenportfeld den vorgeschriebenen UDP-Port für das IPv6 Gateway spezifiziert;
die Einrichtung zum Verkapseln konfiguriert ist zum Ermitteln einer zweiten IPv6 Tag-Adresse in einem Zieladressfeld des zweiten IPv6 Pakets, das spezifiziert:
(1) eine zweite IPv4 Adresse in dem entsprechenden Adressfeld des mobilen Knotens, die eine öffentliche IPv4 Adresse spezifiziert, die sich von der IPv4 Adresse des mobilen Knotens unterscheidet;
(2) einen öffentlichen UDP-Port in dem entsprechenden Portfeld des mobilen Knotens, der sich von dem vorgeschriebenen UDP-Port für den mobilen IPv6 Knoten unterscheidet;
(3) den Protokollidentifizierer, gefolgt von einer privaten IPv4 Adresse in dem entsprechenden Gateway-Adressfeld und verschieden von der IPv4 Gateway-Adresse, zu Beginn des Zieladressfelds; und
(4) einen privaten UDP-Port in einem IPv6 Gateway-Portfeld, der sich von dem vorgeschriebenen Port für das IPv6 Gateway unterscheidet;
die Einrichtung zum Verkapseln konfiguriert ist zum Überschreiben der zweiten IPv4 Adresse in dem Adressfeld des mobilen Knotens und der privaten IPv4 Adresse in dem Gateway-Adressfeld der zweiten IPv6 Tag-Adresse mit der IPv4 Adresse des mobilen Knotens bzw. der in einem Header des zweiten IPv4 Pakets gespeicherten IPv4 Gateway-Adresse;
die Einrichtung zum Verkapseln konfiguriert ist zum Überschreiben des öffentlichen UDP-Ports in dem Portfeld des mobilen Knotens und
des privaten UDP-Ports in dem IPv6 Gateway-Portfeld der zweiten IPv6 Tag-Adresse mit dem vorgeschriebenen UDP-Port für den mobilen IPv6 Knoten bzw. dem vorgeschriebenen Port für das IPv6 Gateway, der in dem Header des zweiten IPv4 Pakets spezifiziert ist; und
die zweite Erzeugungseinrichtung konfiguriert ist zum Verarbeiten des zweiten IPv6 Pakets basierend auf einer ermittelten Übereinstimmung zwischen der modifizierten zweiten IPv6 Tag-Adresse und der IPv6 Tag-Adresse.

26. IPv6 Router (20b) mit:
einer Einrichtung zum Anhängen an ein IPv4 Netzwerk (14) unter Verwendung einer IPv4 Gateway-Adresse und ein IPv6 Netzwerk (16) unter Verwendung einer IPv6 Adresse;
einer Einrichtung zum Empfangen, von dem IPv4 Netzwerk, eines IPv4 Pakets (90'), das ein Zieladressfeld (94) hat, das die IPv4 Gateway-Adresse (36) spezifiziert, ein Zielportfeld (98), das einen vorgeschriebenen UDP-Gateway-Port (40) spezifiziert, ein Quellenadressfeld (92), das eine IPv4 Adresse (102) spezifiziert, und
ein Quellenportfeld (96), das einen zweiten UDP-Port spezifiziert;
einer Einrichtung zum Wiederherstellen eines IPv6 Pakets (70) aus dem IPv4 Paket (90') im Ansprechen auf das Ermitteln des vorgeschriebenen UDP-Gateway-Ports (40) in dem Zielportfeld (98);
einer Einrichtung zum Ermitteln, in einem Quellenadressfeld (74) des IPv6 Pakets (70), einer IPv6 Tag-Adresse (30) mit einem global routingfähigen Adresspräfix für ein IPv6 Gateway (206), wobei das Adresspräfix der IPv6 Tag-Adresse (30) eine IPv4 Gateway-Adresse (36) für das IPv6 Gateway (20b) und einen Protokollidentifizierer (32) zum Identifizieren eines Protokolls für das IPv6 Gateway (20b) zum Übertragen von Paketen von dem IPv4 Netzwerk (14) an das IPv6 Netzwerk (106) oder von dem IPv6 Netzwerk (16) an das IPv4 Netzwerk (14) aufweist, wobei die IPv6 Tag-Adresse (30) des Weiteren eine zweite IPv4 Adresse (34) aufweist, die sich von der IPv4 Adresse (102) unterscheidet;
einer Einrichtung zum Modifizieren der IPv6 Tag-Adresse (30) in eine modifizierte IPv6 Tag-Adresse (30', 30") im Ansprechen auf das Ermitteln des Protokollidentifizierers (32) durch Überschreiben der zweiten IPv4 Adresse (34) mit der IPv4 Adresse (102) und Einfügen des zweiten UDP-Ports (104) in die IPv6 Tag-Adresse (30);
einer Einrichtung zum Ankündigen, auf dem IPv6 Netzwerk, des Adresspräfixes der modifizierten IPv6 Tag-Adresse (30', 30");
einer Einrichtung zum Aktualisieren des IPv6 Pakets (70) in ein aktualisiertes IPv6 Paket durch Einfügen der modifizierten IPv6 Tag-Adresse (30', 30") in das Quellenadressfeld (74) des IPv6 Pakets (70); und
einer Einrichtung zum Ausgeben des aktualisierten IPv6 Pakets auf das IPv6 Netzwerk (16).

27. IPv6 Router nach Anspruch 26, wobei Protokollidentifizierer und eine IPv4 Gateway-Adresse für das IPv6 Gateway das Adresspräfix für das IPv6 Gateway bilden.

28. IPv6 Router nach Anspruch 27, wobei die Einrichtung zum Modifizieren konfiguriert ist zum:
Ermitteln des Protokollidentifizierers am Beginn der IPv6 Tag-Adresse;
Einfügen des zweiten UDP-Ports durch Überschreiben eines ermittelten Quellen-UDP-Port-Werts in der IPv6 Tag-Adresse.

29. IPv6 Router nach Anspruch 28, wobei der IPv6 Router dazu konfiguriert ist, ein zweites empfangenes IPv6 Paket, das von dem IPv6 Netzwerk empfangen wurde und ein IPv6 Zieladressfeld hat, das die modifizierte IPv6 Adresse spezifiziert, auf das IPv4 Netzwerk zu routen, im Ansprechen auf das Ermitteln des Protokollidentifizierers in dem IPv6 Zieladressfeld.

30. IPv6 Router nach Anspruch 29, wobei die IPv6 Tag-Adresse einen privaten UDP-Quellen-Port aufweist, wobei die zweite IPv4 Adresse in der IPv6 Tag-Adresse eine private IP-Adresse spezifiziert, wobei das Quellenadressfeld und das Quellenportfeld des IPv4 Pakets in die jeweilige IPv4 Adresse und den zweiten UDP-Port durch einen Network Address Translator (NAT) mit einem Port Address Translator (PAT) übertragen worden sind.

31. IPv6 Router nach Anspruch 30, wobei:
die Einrichtung zum Ausgeben konfiguriert ist zum Empfangen eines zweiten IPv6 Pakets, das einen Routingheader hat, der die modifizierte IPv6 Tag-Adresse spezifiziert, über das IPv6 Netzwerk;
die Einrichtung zum Ermitteln konfiguriert ist zum Ermitteln des Protokollidentifizierers, der IPv4 Adresse und des zweiten UDP-Ports in der modifizierten IPv6 Tag-Adresse des zweiten IPv6 Pakets;
die Einrichtung zum Modifizieren konfiguriert ist zum Modifizieren des zweiten IPv6 Pakets in ein weitergeleitetes IPv6 Paket durch Einfügen der modifizierten IPv6 Tag-Adresse in das Zieladressfeld des zweiten IPv6 Pakets;
die Einrichtung zum Wiederherstellen konfiguriert ist zum Verkapseln des weitergeleiteten IPv6-Pakets in ein zweites IPv4 Paket, das ein Zieladressfeld hat, das die IPv4 Adresse spezifiziert, und ein Portfeld,
das den zweiten UDP-Port spezifiziert; und
die Einrichtung zum Empfangen konfiguriert ist zum Ausgeben des zweiten IPv4 Pakets auf das IPv4 Netzwerk.

32. IPv6 Router nach Anspruch 30, wobei die IPv4 Gateway-Adresse eine private Adresse und der vorgeschriebene UDP Gateway-Port ein privater Port ist, das Zieladressfeld und das Zielportfeld von einem zweiten NAT mit einem PAT übertragen worden sind, die Einrichtung zum Modifizieren konfiguriert ist zum Überschreiben einer öffentlichen IPv4 Gateway-Adresse und eines öffentlichen UDP Gateway-Ports in der IPv6 Tag-Adresse mit dem vorgeschriebenen UDP Gateway-Port bzw. der IPv4 Gate-Adresse.

33. Computerprogramm oder Computerprogrammerzeugnis oder computerlesbares Medium mit Befehlen zum Durchführen eines Verfahrens nach einem der Ansprüche 1 bis 16.

## Revendications

1. Procédé dans un noeud mobile IPv6 (20a), le procédé comprenant :
la première génération d'une adresse d'étiquette IPv6 (30) comprenant un préfixe d'adresse pouvant être acheminé mondialement pour une passerelle IPv6 (20b), le préfixe d'adresse de l'adresse d'étiquette IPv6 (30) comprenant une adresse de passerelle IPv4 (36) pour la passerelle IPv6 (20b) et un identifiant de protocole (32) pour identifier auprès de la passerelle IPv6 (20b) un protocole de transfert de paquets d'un réseau IPv4 (14) à un réseau IPv6 (16) ou du réseau IPv6 (16) au réseau IPv4 (14) ;
la deuxième génération d'un paquet IPv6 (70) ayant un champ d'adresse de source (74) qui spécifie l'adresse d'étiquette IPv6 (30), et un en-tête qui spécifie une adresse domestique affectée au noeud mobile IPv6 (20a) ;
l'encapsulation du paquet IPv6 (70) dans un paquet IPv4 (90) ayant un en-tête IPv4 comprenant un champ d'adresse de destination (94) qui spécifie l'adresse de passerelle IPv4 (36), un champ d'adresse de source (92) spécifiant une adresse IPv4 de noeud mobile (34) pour le noeud mobile IPv6 (20a), et un en-tête de transport (95) ayant un champ de port de source (96) spécifiant un port UDP prescrit (38) pour le noeud mobile IPv6 (20a), et un champ de port de destination (98) spécifiant un port UDP prescrit (40) pour la passerelle IPv6 (20b) utilisé pour identifier le transfert du paquet IPv6 (70) entre le réseau IPv4 (14) et le réseau IPv6 (16) ; et
la délivrance du paquet IPv4 (90) à la passerelle IPv6 (20b) par l'intermédiaire du réseau IPv4 (14), pour le transfert du paquet IPv6 (70) sur le réseau IPv6 (16).

2. Procédé selon la revendication 1, dans lequel l'identifiant de protocole et l'adresse de passerelle IPv4 constituent le préfixe d'adresse pour la passerelle IPv6.

3. Procédé selon la revendication 2, dans lequel la première étape de génération comprend :
la spécification de l'identifiant de protocole à un début de l'adresse d'étiquette IPv6, suivi de manière contiguë par l'adresse de passerelle IPv4 ;
l'insertion d'un identifiant d'agrégation de niveau de site (SLA) suivant de manière contiguë l'adresse de passerelle IPv4, dans lequel le SLA constitue une partie du préfixe d'adresse pour la passerelle IPv6 ; et
l'insertion de l'adresse IPv4 de noeud mobile dans l'adresse d'étiquette IPv6.

4. Procédé selon la revendication 3, dans lequel la première étape de génération comprend en outre :
l'insertion du port UDP prescrit pour la passerelle IPv6 suivant de manière contiguë le SLA ; et
l'insertion du port UDP prescrit pour le noeud mobile IPv6 suivant de manière contiguë l'adresse IPv4 de noeud mobile, l'adresse IPv4 de noeud mobile et le port UDP prescrit constituant un suffixe d'adresse pour identifier le noeud mobile IPv6, l'adresse d'étiquette IPv6 étant une adresse IPv6 pouvant être acheminée.

5. Procédé selon la revendication 4, dans lequel le noeud mobile IPv6 a un agent domestique prescrit ayant une adresse d'agent domestique, la deuxième étape de génération comprenant :
la spécification de l'adresse d'agent domestique à l'intérieur d'un champ d'adresse de destination du paquet IPv6 ; et
l'ajout d'une mise à jour de liaison à l'intérieur du paquet IPv6 pour l'agent domestique prescrit sur la base du noeud mobile IPv6 qui s'est rattaché au réseau IPv4, l'adresse d'étiquette IPv6 pouvant être identifiée comme une adresse temporaire pour le noeud mobile IPv6.

6. Procédé selon la revendication 1, dans lequel la première génération comprend l'insertion, à l'intérieur de l'adresse d'étiquette IPv6, du port UDP prescrit pour la passerelle IPv6.

7. Procédé selon la revendication 6, dans lequel l'adresse de passerelle IPv4 est une adresse publique stockée dans un champ d'adresse de passerelle de l'adresse d'étiquette IPv6, le port UDP prescrit pour la passerelle IPv6 est un port public stocké dans un champ de port de passerelle de l'adresse d'étiquette IPv6, l'adresse IPv4 de noeud mobile est une adresse privée stockée dans un champ d'adresse de noeud mobile de l'adresse d'étiquette IPv6, et le port UDP prescrit pour le noeud mobile IPv6 est un port privé stocké dans un champ de port de noeud mobile de l'adresse d'étiquette IPv6, le procédé comprenant en outre :
la réception, à partir du réseau IPv4, d'un deuxième paquet IPv4 comportant un champ d'adresse de source spécifiant l'adresse de passerelle IPv4, un champ de port de source spécifiant le port UDP prescrit pour la passerelle IPv6, un champ d'adresse de destination spécifiant l'adresse IPv4 de noeud mobile, et un champ de port de destination spécifiant le port UDP prescrit pour le noeud mobile IPv6 ;
la désencapsulation d'un deuxième paquet IPv6 à partir du deuxième paquet IPv4 en réponse à la détection que le champ de port de source spécifie le port UDP prescrit pour la passerelle IPv6 ;
la détection d'une deuxième adresse d'étiquette IPv6 à l'intérieur d'un champ d'adresse de destination du deuxième paquet IPv6 qui spécifie :
(1) une deuxième adresse IPv4, à l'intérieur du champ d'adresse de noeud mobile correspondant, qui spécifie une adresse IPv4 publique distincte de l'adresse IPv4 de noeud mobile,
(2) un port UDP public à l'intérieur du champ de port de noeud mobile correspondant et distinct du port UDP prescrit pour le noeud mobile IPv6, et
(3) l'identifiant de protocole, suivi par l'adresse de passerelle IPv4 à l'intérieur du champ d'adresse de passerelle correspondant, à un début du champ d'adresse de destination ;
l'écrasement de la deuxième adresse IPv4 dans le champ d'adresse de noeud mobile de la deuxième adresse d'étiquette IPv6 par l'adresse IPv4 de noeud mobile ;
l'écrasement du port UDP public dans le champ de port de noeud mobile de la deuxième adresse d'étiquette IPv6 par le port UDP prescrit pour le noeud mobile IPv6 ; et
le traitement du deuxième paquet IPv6 sur la base d'une correspondance déterminée entre la deuxième adresse d'étiquette IPv6 modifiée et l'adresse d'étiquette IPv6.

8. Procédé selon la revendication 7, comprenant en outre l'acheminement de source sélectif du deuxième paquet IPv6 dans un deuxième réseau IPv6 sur la base de la détection d'un en-tête d'acheminement de type 2 spécifiant une autre destination, les étapes de délivrance et de réception comprennent la délivrance et la réception du paquet IPv4 respectif et du deuxième paquet IPv4 par l'intermédiaire d'un convertisseur d'adresse de réseau (NAT) comportant un convertisseur d'adresse de port (PAT).

9. Procédé selon la revendication 6, dans lequel l'adresse de passerelle IPv4 est une adresse publique stockée dans un champ d'adresse de passerelle de l'adresse d'étiquette IPv6, le port UDP prescrit pour la passerelle IPv6 est un port public stocké dans un champ de port de passerelle de l'adresse d'étiquette IPv6, l'adresse IPv4 de noeud mobile est une adresse privée stockée dans un champ d'adresse de noeud mobile de l'adresse d'étiquette IPv6, et le port UDP prescrit pour le noeud mobile IPv6 est un port privé stocké dans un champ de port de noeud mobile de l'adresse d'étiquette IPv6, le procédé comprenant en outre :
la réception, à partir du réseau IPv4, d'un deuxième paquet IPv4 comportant un champ d'adresse de source spécifiant l'adresse de passerelle IPv4, un champ de port de source spécifiant le port UDP prescrit pour la passerelle IPv6, un champ d'adresse de destination spécifiant l'adresse IPv4 de noeud mobile, et un champ de port de destination spécifiant le port UDP prescrit pour le noeud mobile IPv6 ;
la désencapsulation d'un deuxième paquet IPv6 à partir du deuxième paquet IPv4 en réponse à la détection que le champ de port de source spécifie le port UDP prescrit pour la passerelle IPv6 ;
la détection d'une deuxième adresse d'étiquette IPv6 à l'intérieur d'un champ d'adresse de destination du deuxième paquet IPv6 qui spécifie :
(1) une deuxième adresse IPv4, à l'intérieur du champ d'adresse de noeud mobile correspondant, qui spécifie une adresse IPv4 publique distincte de l'adresse IPv4 de noeud mobile,
(2) un port UDP public à l'intérieur du champ de port de noeud mobile correspondant et distinct du port UDP prescrit pour le noeud mobile IPv6,
(3) l'identifiant de protocole, suivi par une adresse IPv4 privée à l'intérieur du champ d'adresse de passerelle correspondant et distincte de l'adresse de passerelle IPv4, à un début du champ d'adresse de destination ; et
(4) un port UDP privé à l'intérieur du champ de port de passerelle IPv6 et distinct du port prescrit pour la passerelle IPv6,
l'écrasement de la deuxième adresse IPv4 dans le champ d'adresse de noeud mobile et l'adresse IPv4 privée dans le champ d'adresse de passerelle de la deuxième adresse d'étiquette IPv6 par respectivement l'adresse IPv4 de noeud mobile et l'adresse de passerelle IPv4 spécifiée dans un en-tête du deuxième paquet IPv4 ;
l'écrasement du port UDP public dans le champ de port de noeud mobile et le port UDP privé dans le champ de port de passerelle IPv6 de la deuxième adresse d'étiquette IPv6 par respectivement le port UDP prescrit pour le noeud mobile IPv6 et le port prescrit pour la passerelle IPv6 spécifiée dans l'en-tête du deuxième paquet IPv4 ; et
le traitement du deuxième paquet IPv6 sur la base d'une correspondance déterminée entre la deuxième adresse d'étiquette IPv6 modifiée et l'adresse d'étiquette IPv6.

10. Procédé dans un routeur IPv6 (20b), le procédé comprenant :
le rattachement à un réseau IPv4 (14) en utilisant une adresse de passerelle IPv4 et à un réseau IPv6 (16) en utilisant une adresse IPv6 ;
la réception, à partir du réseau IPv4 (14), d'un paquet IPv4 (90') comportant un champ d'adresse de destination (94) spécifiant l'adresse de passerelle IPv4 (36), un champ de port de destination (98) spécifiant un port de passerelle UDP prescrit (40), un champ d'adresse de source (92) spécifiant une adresse IPv4 (102) et un champ de port de source (96) spécifiant un deuxième port UDP (104) ;
la récupération d'un paquet IPv6 (70) à partir du paquet IPv4 (90') en réponse à la détection du port de passerelle UDP prescrit (40) dans le champ de port de destination (98) ;
la détection, à l'intérieur d'un champ d'adresse de source (74) du paquet IPv6 (70), d'une adresse d'étiquette IPv6 (30) comprenant un préfixe d'adresse pouvant être acheminé mondialement pour une passerelle IPv6 (20b), le préfixe d'adresse de l'adresse d'étiquette IPv6 (30) comprenant l'adresse de passerelle IPv4 (36) pour la passerelle IPv6 (20b) et un identifiant de protocole (32) pour l'identification auprès de la passerelle IPv6 (20b) d'un protocole de transfert de paquets du réseau IPv4 (14) au réseau IPv6 (16) ou du réseau IPv6 (16) au réseau IPv4 (14), l'adresse d'étiquette IPv6 (30) comprenant en outre une deuxième adresse IPv4 (34) distincte de l'adresse IPv4 (102) ;
la modification de l'adresse d'étiquette IPv6 (30) dans une adresse d'étiquette IPv6 modifiée (30', 30"), en réponse à la détection de l'identifiant de protocole (32), par écrasement de la deuxième adresse IPv4 (34) par l'adresse IPv4 (102) et l'insertion du deuxième port UDP (104) dans l'adresse d'étiquette IPv6 ;
l'annonce, sur le réseau IPv6, du préfixe d'adresse de l'adresse d'étiquette IPv6 modifiée (30', 30") ;
la mise à jour du paquet IPv6 (70) dans un paquet IPv6 mis à jour par l'insertion de l'adresse d'étiquette IPv6 modifiée (30', 30") dans le champ d'adresse de source (74) du paquet IPv6 (70) ; et
la délivrance du paquet IPv6 mis à jour sur le réseau IPv6 (16).

11. Procédé selon la revendication 10, dans lequel l'identifiant de protocole et l'adresse de passerelle IPv4 pour la passerelle IPv6 constituent le préfixe d'adresse pour la passerelle IPv6.

12. Procédé selon la revendication 11, dans lequel la modification comprend en outre :
la détection de l'identifiant de protocole à un début de l'adresse d'étiquette IPv6 ;
l'insertion du deuxième port UDP par écrasement d'une valeur de port UDP de source détectée dans l'adresse d'étiquette IPv6.

13. Procédé selon la revendication 12, dans lequel le routeur IPv6 est configuré pour acheminer un deuxième paquet IPv6 reçu qui est reçu du réseau IPv6 et qui comporte un champ d'adresse de destination IPv6 spécifiant l'adresse IPv6 modifiée, sur le réseau IPv4 en réponse à la détection de l'identifiant de protocole dans le champ d'adresse de destination IPv6.

14. Procédé selon la revendication 13, dans lequel l'adresse d'étiquette IPv6 comprend un port de source UDP privé, la deuxième adresse IPv4 dans l'adresse d'étiquette IPv6 spécifiant une adresse IP privée, le champ d'adresse de source et le champ de port de source du paquet IPv4 ayant été convertis dans l'adresse IPv4 respective et le deuxième port UDP par un convertisseur d'adresse de réseau (NAT) comportant un convertisseur d'adresse de port (PAT).

15. Procédé selon la revendication 14, comprenant en outre :
la réception, par l'intermédiaire du réseau IPv6, d'un deuxième paquet IPv6 comportant un en-tête d'acheminement qui spécifie l'adresse d'étiquette IPv6 modifiée ;
la détection de l'identifiant de protocole, l'adresse IPv4 et le deuxième port UDP dans l'adresse d'étiquette IPv6 modifiée du deuxième paquet IPv6 ;
la modification du deuxième paquet IPv6 dans un paquet IPv6 transféré par l'insertion de l'adresse d'étiquette IPv6 modifiée dans le champ d'adresse de destination du deuxième paquet IPv6 ;
l'encapsulation du paquet IPv6 transféré dans un deuxième paquet IPv4 comportant un champ d'adresse de destination spécifiant l'adresse IPv4 et un champ de port spécifiant le deuxième port UDP ; et
la délivrance du deuxième paquet IPv4 sur le réseau IPv4.

16. Procédé selon la revendication 14, dans lequel l'adresse de passerelle IPv4 est une adresse privée et le port de passerelle UDP prescrit est un port privé, le champ d'adresse de destination et le champ de port de destination ayant été convertis par un deuxième NAT comportant un PAT, la modification comprenant l'écrasement d'une adresse de passerelle IPv4 publique et d'un port de passerelle UDP publique dans l'adresse d'étiquette IPv6 par respectivement le port de passerelle UDP prescrit et l'adresse de passerelle IPv4.

17. Noeud mobile IPv6 (20a) comprenant :
un moyen pour effectuer la première génération (56) d'une adresse d'étiquette IPv6 (30) comprenant un préfixe d'adresse pouvant être acheminé mondialement pour une passerelle IPv6 (20b), le préfixe d'adresse de l'adresse d'étiquette IPv6 (30) comprenant une adresse de passerelle IPv4 (36) pour la passerelle IPv6 (20b) et un identifiant de protocole (32) pour identifier auprès de la passerelle IPv6 (20b) un protocole de transfert de paquets d'un réseau IPv4 (14) à un réseau IPv6 (16) et du réseau IPv6 (16) au réseau IPv4 (14) ;
un moyen pour effectuer la deuxième génération (58) d'un paquet IPv6 (70) ayant un champ d'adresse de source (74) qui spécifie l'adresse d'étiquette IPv6 (30), et un en-tête qui spécifie une adresse domestique affectée au noeud mobile IPv6 ;
un moyen pour effectuer l'encapsulation (54) du paquet IPv6 (70) dans un paquet IPv4 (90) ayant un en-tête IPv4 comprenant un champ d'adresse de destination (94) qui spécifie l'adresse de passerelle IPv4 (36), un champ d'adresse de source (92) spécifiant une adresse IPv4 de noeud mobile (34) pour le noeud mobile IPv6 (20a), et un en-tête de transport (95) ayant un champ de port de source (96) spécifiant un port UDP prescrit (38) pour le noeud mobile IPv6 (20a), et un champ de port de destination (98) spécifiant un port UDP prescrit (40) pour la passerelle IPv6 (20b) utilisé pour identifier le transfert du paquet IPv6 (70) entre le réseau IPv4 (14) et le réseau IPv6 (16) ; et
un moyen pour effectuer la délivrance (64) du paquet IPv4 (90) à la passerelle IPv6 (20b) par l'intermédiaire du réseau IPv4 (14), pour le transfert du paquet IPv6 (70) sur le réseau IPv6 (16).

18. Noeud mobile IPv6 selon la revendication 17, dans lequel l'identifiant de protocole et l'adresse de passerelle IPv4 constituent le préfixe d'adresse pour la passerelle IPv6.

19. Noeud mobile IPv6 selon la revendication 18, dans lequel le premier moyen de génération est configuré pour effectuer :
la spécification de l'identifiant de protocole à un début de l'adresse d'étiquette IPv6, suivi de manière contiguë par l'adresse de passerelle IPv4 ;
l'insertion d'un identifiant d'agrégation de niveau de site (SLA) suivant de manière contiguë l'adresse de passerelle IPv4, dans lequel le SLA constitue une partie du préfixe d'adresse pour la passerelle IPv6 ; et
l'insertion de l'adresse IPv4 de noeud mobile dans l'adresse d'étiquette IPv6.

20. Noeud mobile IPv6 selon la revendication 19, dans lequel le premier moyen de génération est configuré pour effectuer :
l'insertion du port UDP prescrit pour la passerelle IPv6 suivant de manière contiguë le SLA ; et
l'insertion du port UDP prescrit pour le noeud mobile IPv6 suivant de manière contiguë l'adresse IPv4 de noeud mobile, l'adresse IPv4 de noeud mobile et le port UDP prescrit constituant un suffixe d'adresse pour identifier le noeud mobile IPv6, l'adresse d'étiquette IPv6 étant une adresse IPv6 pouvant être acheminée.

21. Noeud mobile IPv6 selon la revendication 20, dans lequel le noeud mobile IPv6 a un agent domestique prescrit ayant une adresse d'agent domestique correspondante, le deuxième moyen de génération étant configuré pour effectuer la spécification de l'adresse d'agent domestique à l'intérieur d'un champ d'adresse de destination du paquet IPv6, et l'ajout d'une mise à jour de liaison à l'intérieur du paquet IPv6 pour l'agent domestique prescrit sur la base du noeud mobile IPv6 qui s'est rattaché au réseau IPv4, l'adresse d'étiquette IPv6 pouvant être identifiée comme une adresse temporaire pour le noeud mobile IPv6.

22. Noeud mobile IPv6 selon la revendication 21, dans lequel le premier moyen de génération est configuré pour effectuer l'insertion, à l'intérieur de l'adresse d'étiquette IPv6, du port UDP prescrit pour la passerelle IPv6.

23. Noeud mobile IPv6 selon la revendication 22, dans lequel l'adresse de passerelle IPv4 est une adresse publique stockée dans un champ d'adresse de passerelle de l'adresse d'étiquette IPv6, le port UDP prescrit pour la passerelle IPv6 est un port public stocké dans un champ de port de passerelle de l'adresse d'étiquette IPv6, l'adresse IPv4 de noeud mobile est une adresse privée stockée dans un champ d'adresse de noeud mobile de l'adresse d'étiquette IPv6, et le port UDP prescrit pour le noeud mobile IPv6 est un port privé stocké dans un champ de port de noeud mobile de l'adresse d'étiquette IPv6, dans lequel :
le moyen pour effectuer la délivrance est configuré pour effectuer la réception, à partir du réseau IPv4, d'un deuxième paquet IPv4 comportant un champ d'adresse de source spécifiant l'adresse de passerelle IPv4, un champ de port de source spécifiant le port UDP prescrit pour la passerelle IPv6, un champ d'adresse de destination spécifiant l'adresse IPv4 de noeud mobile, et un champ de port de destination spécifiant le port UDP prescrit pour le noeud mobile IPv6 ;
le moyen d'encapsulation est configuré pour effectuer la désencapsulation d'un deuxième paquet IPv6 à partir du deuxième paquet IPv4 en réponse à la détection que le champ de port de source spécifie le port UDP prescrit pour la passerelle IPv6 ;
le moyen d'encapsulation est configuré pour effectuer la détection d'une deuxième adresse d'étiquette IPv6 à l'intérieur d'un champ d'adresse de destination du deuxième paquet IPv6 qui spécifie :
(1) une deuxième adresse IPv4, à l'intérieur du champ d'adresse de noeud mobile correspondant, qui spécifie une adresse IPv4 publique distincte de l'adresse IPv4 de noeud mobile,
(2) un port UDP public à l'intérieur du champ de port de noeud mobile correspondant et distinct du port UDP prescrit pour le noeud mobile IPv6, et
(3) l'identifiant de protocole, suivi par l'adresse de passerelle IPv4 à l'intérieur du champ d'adresse de passerelle correspondant, à un début du champ d'adresse de destination ;
le moyen d'encapsulation est configuré pour effectuer l'écrasement de la deuxième adresse IPv4 dans le champ d'adresse de noeud mobile de la deuxième adresse d'étiquette IPv6 par l'adresse IPv4 de noeud mobile ;
le moyen d'encapsulation est configuré pour effectuer l'écrasement du port UDP public dans le champ de port de noeud mobile de la deuxième adresse d'étiquette IPv6 par le port UDP prescrit pour le noeud mobile IPv6 ; et
le deuxième moyen de génération est configuré pour effectuer le traitement du deuxième paquet IPv6 sur la base d'une correspondance déterminée entre la deuxième adresse d'étiquette IPv6 modifiée et l'adresse d'étiquette IPv6.

24. Noeud mobile IPv6 selon la revendication 23, dans lequel :
le deuxième moyen de génération est configuré pour effectuer l'acheminement de source sélectif du deuxième paquet IPv6 dans un deuxième réseau IPv6 sur la base de la détection d'un en-tête d'acheminement de type 2 spécifiant une autre destination, et
le moyen de délivrance est configuré pour effectuer la délivrance et la réception du paquet IPv4 respectif et du deuxième paquet IPv4 par l'intermédiaire d'un convertisseur d'adresse de réseau (NAT) comportant un convertisseur d'adresse de port (PAT).

25. Noeud mobile IPv6 selon la revendication 22, dans lequel l'adresse de passerelle IPv4 est une adresse publique stockée dans un champ d'adresse de passerelle de l'adresse d'étiquette IPv6, le port UDP prescrit pour la passerelle IPv6 est un port public stocké dans un champ de port de passerelle de l'adresse d'étiquette IPv6, l'adresse IPv4 de noeud mobile est une adresse privée stockée dans un champ d'adresse de noeud mobile de l'adresse d'étiquette IPv6, et le port UDP prescrit pour le noeud mobile IPv6 est un port privé stocké dans un champ de port de noeud mobile de l'adresse d'étiquette IPv6, dans lequel :
le moyen de délivrance est configuré pour effectuer la réception, à partir du réseau IPv4, d'un deuxième paquet IPv4 comportant un champ d'adresse de source spécifiant l'adresse de passerelle IPv4, un champ de port de source spécifiant le port UDP prescrit pour la passerelle IPv6, un champ d'adresse de destination spécifiant l'adresse IPv4 de noeud mobile, et un champ de port de destination spécifiant le port UDP prescrit pour le noeud mobile IPv6 ;
le moyen d'encapsulation étant configuré pour effectuer la désencapsulation d'un deuxième paquet IPv6 à partir du deuxième paquet IPv4 en réponse à la détection que le champ de port de source spécifie le port UDP prescrit pour la passerelle IPv6 ;
le moyen d'encapsulation étant configuré pour effectuer la détection d'une deuxième adresse d'étiquette IPv6 à l'intérieur d'un champ d'adresse de destination du deuxième paquet IPv6 qui spécifie :
(1) une deuxième adresse IPv4, à l'intérieur du champ d'adresse de noeud mobile correspondant, qui spécifie une adresse IPv4 publique distincte de l'adresse IPv4 de noeud mobile,
(2) un port UDP public à l'intérieur du champ de port de noeud mobile correspondant et distinct du port UDP prescrit pour le noeud mobile IPv6,
(3) l'identifiant de protocole, suivi par une adresse IPv4 privée à l'intérieur du champ d'adresse de passerelle correspondant et distincte de l'adresse de passerelle IPv4, à un début du champ d'adresse de destination ; et
(4) un port UDP privé à l'intérieur d'un champ de port de passerelle IPv6 et distinct du port prescrit pour la passerelle IPv6,
le moyen d'encapsulation étant configuré pour effectuer l'écrasement de la deuxième adresse IPv4 dans le champ d'adresse de noeud mobile et l'adresse IPv4 privée dans le champ d'adresse de passerelle de la deuxième adresse d'étiquette IPv6 par respectivement l'adresse IPv4 de noeud mobile et l'adresse de passerelle IPv4 spécifiée dans un en-tête du deuxième paquet IPv4 ;
le moyen d'encapsulation étant configuré pour effectuer l'écrasement du port UDP public dans le champ de port de noeud mobile et le port UDP privé dans le champ de port de passerelle IPv6 de la deuxième adresse d'étiquette IPv6 par respectivement le port UDP prescrit pour le noeud mobile IPv6 et le port prescrit pour la passerelle IPv6 spécifiée dans l'en-tête du deuxième paquet IPv4 ; et
le deuxième moyen de génération étant configuré pour effectuer le traitement du deuxième paquet IPv6 sur la base d'une correspondance déterminée entre la deuxième adresse d'étiquette IPv6 modifiée et l'adresse d'étiquette IPv6.

26. Routeur IPv6 (20b), comprenant :
un moyen pour effectuer le rattachement à un réseau IPv4 (14) en utilisant une adresse de passerelle IPv4 et à un réseau IPv6 (16) en utilisant une adresse IPv6 ;
un moyen pour effectuer la réception, à partir du réseau IPv4 (14), d'un paquet IPv4 (90') comportant un champ d'adresse de destination (94) spécifiant l'adresse de passerelle IPv4 (36), un champ de port de destination (98) spécifiant un port de passerelle UDP prescrit (40), un champ d'adresse de source (92) spécifiant une adresse IPv4 (102) et un champ de port de source (94) spécifiant un deuxième port UDP (104) ;
un moyen pour effectuer la récupération d'un paquet IPv6 (70) à partir du paquet IPv4 (90') en réponse à la détection du port de passerelle UDP prescrit (40) dans le champ de port de destination (98) ;
un moyen pour effectuer la détection, à l'intérieur d'un champ d'adresse de source (74) du paquet IPv6, d'une adresse d'étiquette IPv6 (30) comprenant un préfixe d'adresse pouvant être acheminé mondialement pour une passerelle IPv6 (20b), le préfixe d'adresse de l'adresse d'étiquette IPv6 (30) comprenant une adresse de passerelle IPv4 (36) pour la passerelle IPv6 (20b) et un identifiant de protocole (32) pour l'identification auprès de la passerelle IPv6 (20b) d'un protocole de transfert de paquets du réseau IPv4 (14) au réseau IPv6 (16) ou du réseau IPv6 (16) au réseau IPv4 (14), l'adresse d'étiquette IPv6 (30) comprenant en outre une deuxième adresse IPv4 (34) distincte de l'adresse IPv4 (102) ;
un moyen pour effectuer la modification de l'adresse d'étiquette IPv6 (30) dans une adresse d'étiquette IPv6 modifiée (30', 30"), en réponse à la détection de l'identifiant de protocole (32), par écrasement de la deuxième adresse IPv4 (34) par l'adresse IPv4 (102) et l'insertion du deuxième port UDP (104) dans l'adresse d'étiquette IPv6 (30) ;
un moyen pour effectuer l'annonce, sur le réseau IPv6, du préfixe d'adresse de l'adresse d'étiquette IPv6 modifiée (30', 30") ;
un moyen pour effectuer la mise à jour du paquet IPv6 (70) dans un paquet IPv6 mis à jour par l'insertion de l'adresse d'étiquette IPv6 modifiée (30', 30") dans le champ d'adresse de source (74) du paquet IPv6 (70) ; et
un moyen pour effectuer la délivrance du paquet IPv6 mis à jour sur le réseau IPv6 (16).

27. Routeur IPv6 selon la revendication 26, dans lequel l'identifiant de protocole et une adresse de passerelle IPv4 pour la passerelle IPv6 constituent le préfixe d'adresse pour la passerelle IPv6.

28. Routeur IPv6 selon la revendication 27, dans lequel le moyen de modification est configuré pour effectuer :
la détection de l'identifiant de protocole à un début de l'adresse d'étiquette IPv6 ;
l'insertion du deuxième port UDP par écrasement d'une valeur de port UDP de source détectée dans l'adresse d'étiquette IPv6.

29. Routeur IPv6 selon la revendication 28, dans lequel le routeur IPv6 est configuré pour acheminer un deuxième paquet IPv6 reçu qui est reçu du réseau IPv6 et qui comporte un champ d'adresse de destination IPv6 spécifiant l'adresse IPv6 modifiée, sur le réseau IPv4 en réponse à la détection de l'identifiant de protocole dans le champ d'adresse de destination IPv6.

30. Routeur IPv6 selon la revendication 29, dans lequel l'adresse d'étiquette IPv6 comprend un port de source UDP privé, la deuxième adresse IPv4 dans l'adresse d'étiquette IPv6 spécifiant une adresse IP privée, le champ d'adresse de source et le champ de port de source du paquet IPv4 ayant été convertis dans l'adresse IPv4 respective et le deuxième port UDP par un convertisseur d'adresse de réseau (NAT) comportant un convertisseur d'adresse de port (PAT).

31. Routeur IPv6 selon la revendication 30, dans lequel :
le moyen de délivrance est configuré pour effectuer la réception, par l'intermédiaire du réseau IPv6, d'un deuxième paquet IPv6 comportant un en-tête d'acheminement qui spécifie l'adresse d'étiquette IPv6 modifiée ;
le moyen de détection est configuré pour effectuer la détection de l'identifiant de protocole, l'adresse IPv4 et le deuxième port UDP dans l'adresse d'étiquette IPv6 modifiée du deuxième paquet IPv6 ;
le moyen de modification est configuré pour effectuer la modification du deuxième paquet IPv6 dans un paquet IPv6 transféré par l'insertion de l'adresse d'étiquette IPv6 modifiée dans le champ d'adresse de destination du deuxième paquet IPv6 ;
le moyen de récupération est configuré pour effectuer l'encapsulation du paquet IPv6 transféré dans un deuxième paquet IPv4 comportant un champ d'adresse de destination spécifiant l'adresse IPv4 et un champ de port spécifiant le deuxième port UDP ; et
le moyen de réception est configuré pour effectuer la délivrance du deuxième paquet IPv4 sur le réseau IPv4.

32. Routeur IPv6 selon la revendication 30, dans lequel l'adresse de passerelle IPv4 est une adresse privée et le port de passerelle UDP prescrit est un port privé, le champ d'adresse de destination et le champ de port de destination ayant été convertis par un deuxième NAT comportant un PAT, le moyen de modification étant configuré pour effectuer l'écrasement d'une adresse de passerelle IPv4 publique et d'un port de passerelle UDP publique dans l'adresse d'étiquette IPv6 par respectivement le port de passerelle UDP prescrit et l'adresse de passerelle IPv4.

33. Programme informatique ou produit de programme informatique ou support lisible par ordinateur comprenant des instructions pour effectuer un procédé selon l'une quelconque des revendications 1 à 16.
